(19) Europäisches Patentamt
European Patent Office
Office européen des brevets

(11) **EP 4 184 816 B1**

(12) **EUROPEAN PATENT SPECIFICATION**

(45) Date of publication and mention
of the grant of the patent:
**05.11.2025 Bulletin 2025/45**

(21) Application number: **21853934.4**

(22) Date of filing: **29.07.2021**

(51) International Patent Classification (IPC):
*H04L 5/00* (2006.01)     *H04J 11/00* (2006.01)
*H04W 52/14* (2009.01)     *H04W 52/32* (2009.01)

(52) Cooperative Patent Classification (CPC):
**H04J 11/005; H04L 5/0051; H04L 5/0073;**
**H04L 5/0078; H04W 52/146; H04W 52/325;**
H04J 2211/005; H04L 5/0023; H04L 5/0094

(86) International application number:
**PCT/CN2021/109341**

(87) International publication number:
**WO 2022/028309 (10.02.2022 Gazette 2022/06)**

(54) **UPLINK TRANSMISSION METHOD AND RELATED APPARATUS**

UPLINK-ÜBERTRAGUNGSVERFAHREN UND ZUGEHÖRIGE VORRICHTUNG

PROCÉDÉ DE TRANSMISSION DE LIAISON MONTANTE ET APPAREIL ASSOCIÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **01.08.2020   CN 202010763873**
**20.10.2020   CN 202011128974**

(43) Date of publication of application:
**24.05.2023   Bulletin 2023/21**

(73) Proprietor: **Huawei Technologies Co., Ltd.**
**Shenzhen, Guangdong 518129 (CN)**

(72) Inventors:
  • **YU, Yawei**
**Shenzhen, Guangdong 518129 (CN)**
  • **YU, Jian**
**Shenzhen, Guangdong 518129 (CN)**
  • **GUO, Zhiheng**
**Shenzhen, Guangdong 518129 (CN)**
  • **ZHOU, Guohua**
**Shenzhen, Guangdong 518129 (CN)**
  • **GE, Liwei**
**Shenzhen, Guangdong 518129 (CN)**
  • **WANG, Shaobo**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(56) References cited:
**EP-A1- 3 624 477       WO-A1-2018/044715**
**CN-A- 110 417 524       CN-A- 111 132 173**
**CN-A- 111 132 173       CN-B- 105 557 046**
**US-A1- 2019 342 062       US-A1- 2020 068 549**
**US-A1- 2020 146 016**

**Description**

**TECHNICAL FIELD**

This application relates to the data transmission field, and in particular, to an uplink transmission method and a related apparatus.

**BACKGROUND**

In a mobile communications network, during data transmission with a network device, a terminal device may suffer interference caused by data transmission of a terminal device in a neighboring cell. Therefore, during data transmission, a receive end may fail to correctly demodulate a received signal due to excessive interference, and the transmission fails.

Further, WO 2018/044715 A1 refers to systems and methods of compensating for interference in a 5G system. An Interference Measurement Resource (IMR) is present in multiple resource elements of a subframe or a combination of a ZP and NZP Tracking Reference Signal (PT-RS) are used. An IMR covariance matrix is applied to compensate for the interference. The number of IMR subcarriers and symbols between adjacent IMRs is dependent on the numerologies and synchronization within the UE network. When the IMR is in multiple subcarriers in the first symbol of the second slot, and the matrix is determined using the IMR rather than a DMRS. The DCI comprises a flag that denotes whether IMR is enabled for a current PDCH, and indicates the manner to use the IMR. The subcarrier index for the NZP PT-RS overlaps the subcarrier index for the ZP PT-RS of another UE or gNB.

Further, US 2020/068549 A1 refers to a beam management method in a wireless communication system. The beam management method performed by a serving base station comprise setting, to a UE, a plurality of beam management reference signals (RSs) for downlink beam scanning of the UE, transmitting at least one beam management reference signal to the UE through at least one transmission beam; receiving beam index information corresponding to a predetermined number of transmission beams from the UE; and based on the received beam index information, transmitting indication information for controlling a beam used for transmission of a downlink reference signal of the neighboring eNB and/or transmission of an uplink reference signal of the neighboring UE to the neighboring eNB and/or the neighboring UE.

Further, EP 3 624 477 A1 refers to a method for transmitting an uplink signal, a terminal, and a network device. In one aspect, by receiving configuration information of a zero-power uplink reference signal transmitted by a network device, and determining resources occupied by the zero-power uplink reference signal according to the configuration information, no uplink data is transmitted over the resources, and/or no non-zero-power uplink reference signal is transmitted over the resources.

**SUMMARY**

This application provides an uplink transmission method and a related apparatus to increase a transmission success rate of data transmission from a terminal device to a network device. This problem is solved by the subject matter of the independent claims. Further implementation forms are provided in the dependent claims.

The invention is defined by the appended claims.

The terminal device sets the zero power reference signal in the uplink signal, and a signal received on the time-frequency resource of the zero power reference signal can reflect interference caused by data transmission from a neighboring cell around a serving cell of the terminal device to uplink data transmission of the terminal device. Therefore, the network device can estimate neighboring cell interference based on the uplink signal received within the range of the time-frequency resource of the zero power reference signal, and perform interference cancellation on the received signal, thereby improving uplink data demodulation performance and improving an uplink data transmission capability.

**BRIEF DESCRIPTION OF DRAWINGS**

FIG. 1 is a schematic diagram 1 of an application scenario according to an embodiment of this application;
FIG. 2 is an interaction flowchart 1 of an uplink transmission method according to an embodiment of this application;
FIG. 3A to FIG. 3G are schematic diagrams 1 to 7 of patterns of zero power reference signals according to an embodiment of this application;
FIG. 4 is a schematic diagram 1 of distribution of time-frequency resources of zero power reference signals in a multi-cell scenario according to an embodiment of this application;

FIG. 5A and FIG. 5B are schematic diagrams 1 and 2 of patterns of zero power reference signals in a multi-cell scenario according to an embodiment of this application;

FIG. 6A and FIG. 6B are schematic diagrams 3 and 4 of patterns of zero power reference signals in a multi-cell scenario according to an embodiment of this application;

FIG. 7A and FIG. 7B are schematic diagrams 5 and 6 of patterns of zero power reference signals in a multi-cell scenario according to an embodiment of this application;

FIG. 8A is a schematic diagram 2 of distribution of time-frequency resources of zero power reference signals in a multi-cell scenario according to an embodiment of this application;

FIG. 8B is a schematic diagram 3 of distribution of time-frequency resources of zero power reference signals in a multi-cell scenario according to an embodiment of this application;

FIG. 9A to FIG. 9D are schematic diagrams 9 to 12 of patterns of zero power reference signals in a multi-cell scenario according to an embodiment of this application;

FIG. 10 is a schematic diagram of a mapping process according to an embodiment of this application;

FIG. 11 is a schematic diagram of a group of subcarriers in which DMRSs configured based on CDM groups are located;

FIG. 12 to FIG. 15(3) are schematic diagrams of patterns of zero power reference signals configured in a first configuration mode according to an embodiment of this application;

FIG. 16 to FIG. 22(6) are schematic diagrams of patterns of zero power reference signals configured in a second configuration mode according to an embodiment of this application;

FIG. 23 is a schematic diagram 1 of a structure of a communications apparatus according to an embodiment of this application.

FIG. 24 is a schematic diagram 2 of a structure of a communications apparatus according to an embodiment of this application.

FIG. 25 is a schematic diagram of a structure of a terminal device according to an embodiment of this application; and

FIG. 26 is a schematic diagram of a structure of a network device according to an embodiment of this application.

## DESCRIPTION OF EMBODIMENTS

### Embodiment 1

This embodiment of this application provides an uplink transmission method. The method may be applied to a communications network. The communications network may include several communications devices. In an example, the communications network may include a network device and a terminal device (user equipment, UE). The network device may receive an uplink signal sent on a preplanned time-frequency resource by one or more terminal devices. When the uplink signal sent by the terminal device to the network device suffers interference, demodulation performance of the network device deteriorates.

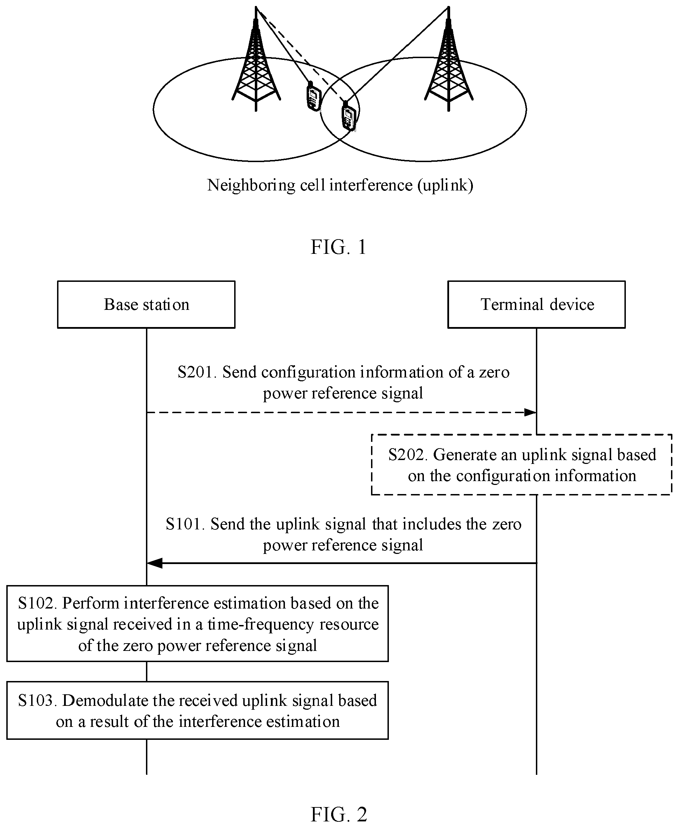

FIG. 1 is a schematic diagram 1 of an application scenario according to an embodiment of this application. As shown in FIG. 1, for example, some UEs in a network may be within coverage of a plurality of cells at the same time. In this case, transmission information aliasing and interference exist in uplink and downlink transmission of different UEs. Uplink transmission is used as an example. When an uplink signal transmitted by UE in a left cell reaches a left base station in FIG. 1, the left base station also receives an uplink signal sent by UE in a neighboring right cell to a right base station in FIG. 1. In this case, interference is caused to the signal of the UE in the left cell, that is, a relatively strong interference signal is aliased in the signal received by the left base station. Therefore, a signal of the UE in the left cell may not be accurately demodulated.

The following uses an example in which a network device is a base station to describe the uplink transmission method provided in this embodiment of this application. In this embodiment of this application, the network device may be a base station in an LTE communications system, or may be a base station (base station, or gNodeB, gNB for short) in a new radio access technology (New Radio, NR) system.

FIG. 2 is a schematic diagram of an interaction flowchart of the uplink transmission method according to this embodiment of this application. As shown in FIG. 2, the method in this embodiment of this application may include the following steps.

S101. A terminal device sends, to a base station, an uplink signal that includes a zero power reference signal, where in a time-frequency resource for sending the uplink signal, transmit power of the uplink signal within a range of a time-frequency resource of the zero power reference signal is zero.

The zero power reference signal (Zero Power Channel State Information Reference Signal, ZP CSI-RS) may be used for uplink interference measurement. Because no data is actually sent on the time-frequency resource of the zero power reference signal, this resource may also be referred to as a mute RE.

S102. The base station performs interference estimation based on the uplink signal received in the time-frequency resource of the zero power reference signal.

The base station may perform neighboring cell interference estimation based on the uplink signal received in the time-frequency resource of the zero power reference signal.

S103. The base station demodulates the received uplink signal based on a result of the channel estimation.

The base station may perform interference suppression and data demodulation on the received uplink signal based on a result of the neighboring cell interference estimation.

In this embodiment of this application, for example, the terminal device may send the uplink signal on a physical uplink shared channel PUSCH. In an example, the time-frequency resource for sending the uplink signal may be a first resource in the PUSCH, and the first resource may include a second resource corresponding to the zero power reference signal. When sending the uplink signal on the first resource, the terminal device may perform configuration so that transmit power of the uplink signal within a range of the second resource is zero.

In this embodiment of this application, before step S101, the method may further include the following steps.

S201. The base station sends, to the terminal device, configuration information of the zero power reference signal.

The configuration information is used to identify the range of the time-frequency resource of the zero power reference signal.

In this embodiment of this application, the gNB may send the configuration information to the UE by using a radio resource control RRC message or downlink control information (Downlink Control Information, DCI) signaling. For example, a new field may be directly added to the message or a redundancy bit of an existing field may be used. Alternatively, a parameter indicating whether to configure the zero power reference signal is carried to indirectly notify the UE. In an example, whether to enable the zero power reference signal may be configured by using RRC signaling muteReInterEstimateFlag={0, 1}.

In this embodiment of this application, when performing interference estimation based on another signal and finding that an uplink interference measurement result is greater than a preset threshold for starting measurement, the base station may instruct the terminal device to configure the zero power reference signal in the uplink signal. For example, the another signal may be a sounding reference signal (Sounding Reference Signal, SRS), a demodulation reference signal (Demodulation Reference Signal, DMRS), and the uplink interference measurement result may be at least one parameter, such as RSRP or SINR.

S202. The terminal device generates the uplink signal based on the configuration information.

It should be noted that step S201 is not a mandatory step in this embodiment of this application. In this embodiment of this application, the terminal device may further obtain the configuration information of the zero power reference signal in another manner. In an optional implementation, the terminal device may preconfigure the configuration information of the zero power reference signal. For example, a manner of determining the time-frequency resource of the zero power reference signal may be configured for the terminal device before delivery. In an example, the terminal device may preconfigure a manner of determining the range of the time-frequency resource of the zero power reference signal based on a cell identity of a serving cell. Correspondingly, the base station may also preconfigure the configuration information during delivery or obtain the configuration information from a network management device, to ensure that time-frequency resource ranges of the zero power reference signal determined by the configuration information of the terminal device and the base station are consistent.

In this embodiment of this application, for example, the time-frequency resource for sending the uplink signal may include at least one resource block (Resource Block, RB), and the configuration information may be used to identify at least one of the following information: in any RB for sending the uplink signal, a quantity of REs occupied by the zero power reference signal, an identifier of a subcarrier in which the zero power reference signal is located, and a position of a corresponding time domain symbol.

In an example, the uplink signal may further include a demodulation reference signal DMRS, and the configuration information may include an offset of a time domain symbol in which the time-frequency resource of the zero power reference signal is located relative to a time domain symbol in which a time-frequency resource of the DMRS is located. The zero power reference signal may be set close to the DMRS, or may be set at a position far away from the DMRS. When the time domain symbol in which the time-frequency resource of the zero power reference signal is located is a time domain symbol located at a middle position of the time-frequency resource of the uplink signal, the signal received in the time-frequency resource of the zero power reference signal can more accurately reflect time-varying interference on a channel for receiving the uplink signal. When the time domain symbol in which the time-frequency resource of the zero power reference signal is located is located at a position of the uplink signal close to the DMRS, the time-frequency resource of the zero power reference signal is located at a relatively earlier time domain position in the time-frequency resource of the uplink signal, and the base station may perform channel estimation earlier. Therefore, a demodulation processing efficiency is improved. In other embodiments of this application, distribution of time-frequency resources of zero power reference signals is described in detail.

In this embodiment of this application, in step S102, the base station may obtain, from the received uplink signal based on the range of the time-frequency resource of the zero power reference signal identified by the configuration information, the uplink signal received in the time-frequency resource of the zero power reference signal. Using one RB in the time-frequency resource for sending the uplink signal as an example, the base station may obtain the uplink signal received in the time-frequency resource of the zero power reference signal, and perform estimation on a channel corresponding to the entire RB. Then, in step S103, the base station may perform, based on the result of the channel estimation, interference signal cancellation and denoising processing on the uplink signal received in other REs than the RE occupied by the zero power reference signal in each RB, and then demodulate the uplink signal on which interference signal cancellation and denoising processing are performed.

In an actual application, in an uplink transmission process, a signal sent by another UE in a neighboring cell may cause interference to a signal of target UE received by the gNB, and in particular, cause severer interference to UE at an edge of the current cell. Because a signal sent by the UE at the edge of the cell reaches the gNB after a loss in long-distance transmission, the signal received by the gNB is very weak, and impact of interference is relatively great.

In this embodiment of this application, a problem that interference measurement is inaccurate during uplink transmission can be resolved, uplink interference measurement and uplink transmission performance can be improved, an uplink coverage capability can be improved, and an interference measurement capability of UE located in an edge area of a cell can be improved.

In this embodiment of this application, when the terminal device sends, to the base station, the uplink signal that includes the zero power reference signal, the terminal device actually does not send the signal on the time-frequency resource of the zero power reference signal. Therefore, when the base station receives the uplink signal on the time-frequency resource of the uplink signal, a signal received within the range of the time-frequency resource of the zero power reference signal is actually generated by interference. On this basis, the base station may estimate, based on the signal received within the range of the time-frequency resource of the zero power reference signal, the channel for transmitting the uplink signal, and cancel interference in the uplink transmission process based on the channel estimation result, so that demodulation performance and a transmission rate of uplink transmission can be improved.

**Embodiment 2**

This embodiment of this application provides a plurality of optional implementations of a range of a time-frequency resource of a zero power reference signal. The following describes an implementation of the time-frequency resource of the zero power reference signal by using an example.

In this embodiment of this application, for example, a time-frequency resource for sending an uplink signal may include at least one time-frequency resource unit in a physical uplink shared channel (Physical Uplink Shared Channel, PUSCH). Each time-frequency resource unit may include a plurality of resource elements REs. Each time-frequency resource unit may include one slot or one mini-slot in time domain, or at least two time domain symbols. Each time-frequency resource unit may include a plurality of subcarriers in frequency domain, for example, 12 subcarriers.

In an optional implementation, the time-frequency resource unit may be a resource block RB. In an example, each RB may include 14 time domain symbols of one slot in time domain, each RB may include 12 subcarriers in frequency domain, or each RB may include 12*14 REs. In this embodiment of this application, the time-frequency resource unit may alternatively be a physical resource block (Physical Resource Block, PRB).

It should be noted that, for example, a time domain offset of any $s^{th}$ time domain symbol in the time-frequency resource unit relative to the first time domain symbol in the time-frequency resource unit is s-1, and a frequency domain offset of any $f^{th}$ subcarrier in the time-frequency resource unit relative to the $1^{st}$ subcarrier in the time-frequency resource unit is f-1. For example, a time domain offset of the first time domain symbol in the time-frequency resource unit is 0, a time domain offset of the second time domain symbol is 1, a frequency domain offset of the $1^{st}$ subcarrier is 0, and a frequency domain offset of the $3^{rd}$ subcarrier is 2.

In this embodiment of this application, a set of REs occupied by the zero power reference signal in each time-frequency resource unit may be referred to as a pattern (pattern) of the zero power reference signal. This embodiment of this application provides a plurality of implementations of the pattern of the zero power reference signal.

In this embodiment of this application, configuration information of the zero power reference signal may be used to indicate the pattern of the zero power reference signal in each time-frequency resource unit. For example, the configuration information of the zero power reference signal includes at least one of the following information:

a quantity of zero power reference signals in any time-frequency resource unit for sending the uplink signal;
a quantity of resource elements REs occupied by each zero power reference signal;
a start time domain symbol of a time domain symbol range allowed to be occupied by each zero power reference signal;
when each zero power reference signal occupies two REs, a distribution manner of a time domain symbol in which the two REs are located;

at least one subcarrier in which each zero power reference signal is located;

when each zero power reference signal occupies two REs, a quantity of subcarriers in separation between a first subcarrier and a second subcarrier in which the two REs are located;

when the quantity of zero power reference signals is two, an indication about whether subcarriers in which the two zero power reference signals are located are the same; and

when the subcarriers in which the two zero power reference signals are located are different, a quantity of subcarriers in separation between the subcarriers in which the two zero power reference signals are located.

Table 1 illustrates a group of various parameters and value ranges of the parameters in the configuration information.

Table 1

| Configuration parameters of the zero power reference signal | | | | | | |
|---|---|---|---|---|---|---|
| Quantity | Quantity of REs occupied by each zero power reference signal | Start time domain symbol | Distribution manner of a time domain symbol in which the two REs are located | Subcarrier offset between two REs in each zero power reference signal | Indication about whether subcarriers in which the two zero power reference signals are located are the same | Subcarrier offset between the subcarriers in which the two zero power reference signals are located |
| Enumerated value: 1; 2 Default value: 1 | Enumerated value: Single; Double | Enumerated value: type 1, type 2, type 3 | Enumerated value: first distribution manner; second distribution manner | Enumerated value: 5; 6 | Enumerated value: same; different | Enumerated value: 1, 3, or 5 Default value: 5 |
| Illustration of parameter value ranges and parameter relationships | | | | | | |
| 1 | Single | Arbitrary | N/A | N/A | N/A | N/A |
| 1 | Double | Arbitrary | Arbitrary | 5 in the first distribution manner; 6 in the second distribution manner | N/A | N/A |
| 1 | Single | Arbitrary | N/A | N/A | N/A | N/A |

(continued)

| Configuration parameters of the zero power reference signal | | | | | | |
|---|---|---|---|---|---|---|
| Quantity | Quantity of REs occupied by each zero power reference signal | Start time domain symbol | Distribution manner of a time domain symbol in which the two REs are located | Subcarrier offset between two REs in each zero power reference signal | Indication about whether subcarriers in which the two zero power reference signals are located are the same | Subcarrier offset between the subcarriers in which the two zero power reference signals are located |
| 1 | Double | Arbitrary | Arbitrary | 5 in the first distribution manner; 6 in the second distribution manner | N/A | N/A |
| 2 | Single | Close or close for a plurality of cells | N/A | N/A | Same; different | Arbitrary |
| 2 | Double | Close or close for a plurality of cells | Arbitrary | 5 in the first distribution manner; 6 in the second distribution manner | Same; different | Arbitrary |

In the foregoing table, Single indicates one, and Double indicates two.

In this embodiment of this application, a start time domain symbol of one or more time domain symbols allowed to be occupied by the zero power reference signal may be a time domain offset relative to a time domain symbol in which a DMRS is located, or may be a time domain offset relative to a time domain symbol in which the PUSCH is located.

The following describes an optional implementation of the pattern and meanings of various indication information in the configuration information by using an example.

In this embodiment of this application, there may be one or more zero power reference signals in each time-frequency resource unit. Each zero power reference signal may occupy one or more REs. When each zero power reference signal occupies a plurality of REs, there may be one or more time domain symbols in which the plurality of REs are located, and there may be one or more subcarriers in which the plurality of REs are located. Time-frequency resources of a plurality of zero power reference signals are located in different time domain symbols, and the time-frequency resources of the plurality of zero power reference signals may be located in a same subcarrier or different subcarriers.

In this embodiment of this application, for example, the uplink signal may further include a DMRS, and in each time-frequency resource unit, the time-frequency resource of the zero power reference signal may not overlap a time-frequency resource of the DMRS. For example, the time-frequency resource of the zero power reference signal and the time-frequency resource of the DMRS may be located in different time domain symbols. In an example, a time domain symbol in which the zero power reference signal is located may be close to a time domain symbol in which the DMRS is located. In another example, a time domain symbol in which the zero power reference signal is located may be far away from a time domain symbol in which the DMRS is located.

In an actual application, a time domain symbol range allowed to be occupied by each zero power reference signal may be set. Then, one or more REs of each zero power reference signal may be set to be located in one or more time domain symbols within the time domain symbol range allowed to be occupied. In this embodiment of this application, when each zero power reference signal occupies one RE, a time domain symbol in which the RE is located may be a start time domain symbol of the time domain symbol range allowed to be occupied by each zero power reference signal; or when each zero power reference signal occupies two REs, a time domain symbol in which the two REs are located may be at least one of two time domain symbols starting from the start time domain symbol. It should be noted that, when the quantity of zero power reference signals in each time-frequency resource unit is 2, a time domain symbol range allowed to be occupied may be set for each zero power reference signal.

For example, the time domain symbol range allowed to be occupied by each zero power reference signal may be one or more time domain symbols that are consecutive in time domain, and a start time domain symbol of the time domain symbol range may be set in any one of the following manners.

In an optional setting manner, the start time domain symbol may be the first time domain symbol after the time domain symbol in which the time-frequency resource of the DMRS is located.

In another optional setting manner, the start time domain symbol may be a middle time domain symbol in a time-frequency resource unit. In an example, the middle time domain symbol may be a middle time domain symbol in any other time domain symbol in a time-frequency resource unit than the time domain symbol occupied by the DMRS. The middle time domain symbol is described in detail in the following embodiment.

In still another optional setting manner, the start time domain symbol may be a $K^{th}$ time domain symbol after the first time domain symbol in which the time-frequency resource of the DMRS is located, where K is a maximum quantity of time domain symbols allowed to be occupied by each DMRS. In an example, K may be 1 or 2.

Table 2-1 illustrates a group of start time domain symbols corresponding to various setting manners.

**Table 2-1**

| Type of the setting manner of the start time domain symbol | DMRS | | | Zero power reference signal | | | |
|---|---|---|---|---|---|---|---|
| | Quantity of DMRSs in each time-frequency resource unit | Quantity of time domain symbols occupied by each DMRS | Time domain symbol occupied by the DMRS (indicated by a time domain offset) | Quantity of zero power reference signals in each time-frequency resource unit | Start time domain symbol (indicated by a time domain offset) | When the zero power reference signal occupies two REs, time domain symbols in which the two REs are located (indicated by a time domain offset) | Example of a reference pattern |
| Setting manner 1 (close setting manner) | 1 | 1 | 0 | Same as the DMRS | 1 | At least one of 1 and 2 | FIG. 3A |
| | 1 | 2 | 0 and 1 | Same as the DMRS | 2 | At least one of 2 and 3 | FIG. 3B |
| | 2 | 1 | 0 and 4 | Same as the DMRS | 1 and 5 | At least one of 1 and 2, and at least one of 5 and 6 | FIG. 3E and FIG. 3F |
| Setting manner 2 (far setting manner) | 1 | 1 | 0 | Same as the DMRS | 7 | At least one of 7 and 8 | FIG. 3C |
| | 1 | 2 | 0 and 1 | Same as the DMRS | 7 | At least one of 7 and 8 | FIG. 3D |

(continued)

| Type of the setting manner of the start time domain symbol | DMRS | | | Zero power reference signal | | | |
|---|---|---|---|---|---|---|---|
| | Quantity of DMRSs in each time-frequency resource unit | Quantity of time domain symbols occupied by each DMRS | Time domain symbol occupied by the DMRS (indicated by a time domain offset) | Quantity of zero power reference signals in each time-frequency resource unit | Start time domain symbol (indicated by a time domain offset) | When the zero power reference signal occupies two REs, time domain symbols in which the two REs are located (indicated by a time domain offset) | Example of a reference pattern |
| Setting manner 3 (close setting manner for a plurality of neighboring cells, assuming that a maximum quantity of time domain symbols occupied by the DMRS is 2) | 1 | 1 | 0 | Same as the DMRS | 2 | At least one of 2 and 3 | - |
| | 1 | 2 | 0 and 1 | Same as the DMRS | 3 | At least one of 3 and 4 | - |
| | 2 | 1 | 0 and 4 | Same as the DMRS | 2 and 6 | At least one of 2 and 3, and at least one of 7 and 8 | - |

In this embodiment of this application, when each zero power reference signal occupies different subcarriers on two time domain symbols, interference at different subcarrier positions can be measured, and an interference measurement capability of a frequency selective channel is enhanced. The frequency selective channel is a frequency selective fading channel, that is, interference measurement results in different subcarriers may be obtained based on REs located in different subcarriers.

It should be noted that when the quantity of occupied REs is 2, a distribution manner of a time domain symbol in which each zero power reference signal is located may be the first distribution manner or the second distribution manner. A distribution manner used for a zero power reference signal corresponding to a serving cell may be determined based on a quantity of neighboring cells of the serving cell of the terminal device and a cell identity of the serving cell. Details are described in the following embodiments.

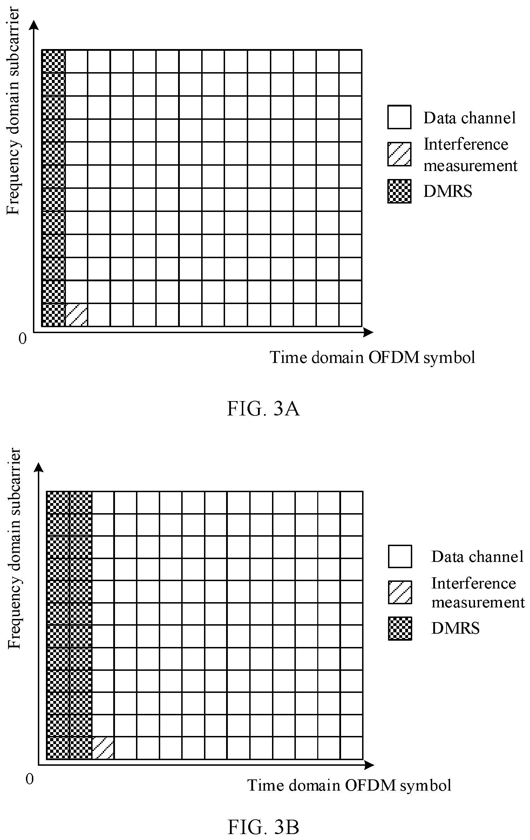

FIG. 3A to FIG. 3G are schematic diagrams 1 to 7 of patterns of zero power reference signals according to an embodiment of this application.

In a first example of the close setting manner, the time domain symbol of the DMRS is one time domain symbol, for example, 0, and the time domain symbol of the zero power reference signal may be the first time domain symbol after the time domain symbol of the DMRS, for example, 1. Refer to the pattern shown in FIG. 3A.

In a second example of the close setting manner, the time domain symbols of the DMRS are time domain symbols that are consecutive in time domain, for example, 0 and 1, and the time domain symbol of the zero power reference signal is the first time domain symbol after a last time domain symbol of the DMRS, for example, 2. Refer to the pattern shown in FIG. 3B.

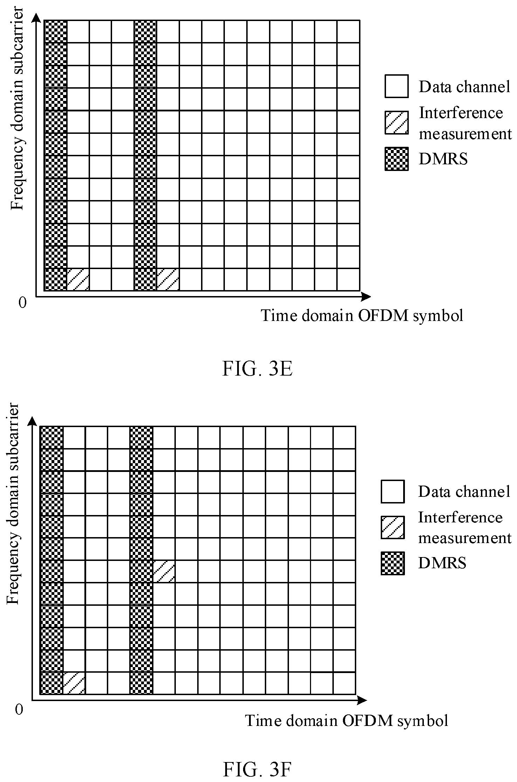

In a third example of the close setting manner, the time domain symbols of the DMRS are two time domain symbols that are inconsecutive in time domain, for example, 0 and 5, and two time domain symbols of the zero power reference signal are respectively first time domain symbols after the two time domain symbols in which the DMRS is located, for example, 1 and 6. Refer to FIG. 3E. It should be noted that the time-frequency resource of the zero power reference signal may be located on a same subcarrier or different subcarriers of different time domain symbols. Refer to FIG. 3F.

In a first example of the far setting manner, the time domain symbol of the DMRS is one time domain symbol, for example, 0, and the time domain symbol of the zero power reference signal is a middle time domain symbol, for example, 7.

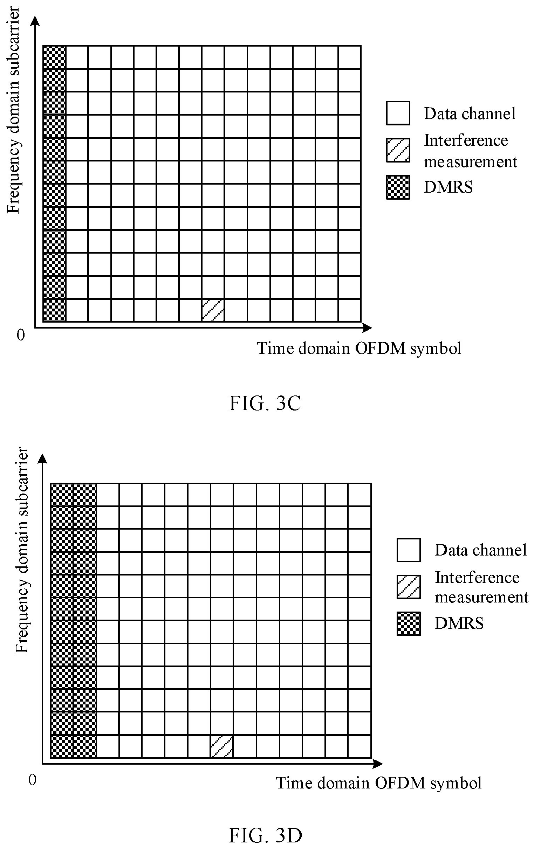

Refer to the pattern shown in FIG. 3C.

In a second example of the far setting manner, the time domain symbols of the DMRS are two time domain symbols that are consecutive in time domain, for example, 0 and 1, and the time domain symbol of the zero power reference signal is a middle time domain symbol, for example, 7. Refer to the pattern shown in FIG. 3D.

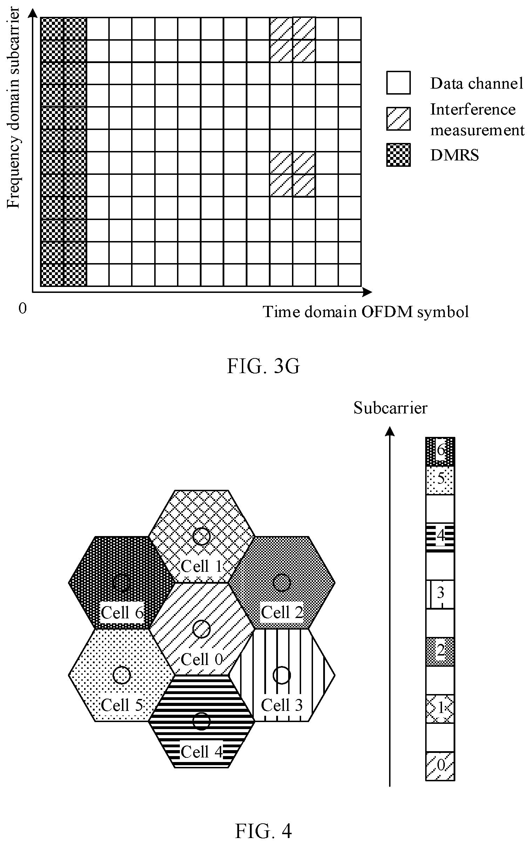

In an example, the DMRS may be located in the first time domain symbol in one RB, or two time domain symbols starting from the first time domain symbol. The time domain symbol in which the zero power reference signal is located may be one or more time domain symbols starting from the start time domain symbol, where a time domain symbol offset of the start time domain symbol may be an integer greater than 3 and less than 11. The subcarrier in which the zero power reference signal is located may be one or more subcarriers whose subcarrier offset is greater than or equal to 0. In this embodiment of this application, the positions and quantity of the time domain symbols in which the zero power reference signal is located may be flexibly indicated and configured, and the positions may be any one or more time domain symbol positions. Referring to the pattern shown in FIG. 3G, offsets of time domain symbols in which the zero power reference signal is located are 10 and 11, and subcarrier offsets of subcarriers in which the zero power reference signal is located are 4, 5, 10, and 11. For another example, offsets of time domain symbols in which the zero power reference signal is located are 6 and 7, and subcarrier offsets of subcarriers in which the zero power reference signal is located are 4, 5, 10, and 11.

It should be noted that the subcarriers of the zero power reference signal shown in FIG. 3A to FIG. 3F are merely examples. Alternatively, the subcarriers of the zero power reference signal may be other subcarriers in a time-frequency resource unit.

In this embodiment of this application, it is assumed that the zero power reference signal is a zero power reference signal corresponding to the serving cell of the terminal device. When the pattern of the time-frequency resource of the zero power reference signal is set, it may be further considered that time-frequency resources of zero power reference signals corresponding to the serving cell and the neighboring cell of the serving cell do not overlap each other. In other words, time-frequency resources of zero power reference signals corresponding to different cells may not overlap each other.

FIG. 4 is a schematic diagram 1 of distribution of time-frequency resources of zero power reference signals in a multi-cell scenario according to an embodiment of this application. In a hexagonal sector model shown in FIG. 4, assuming that the serving cell of the terminal device is a cell 0 (Cell 0), there may be six neighboring cells around the serving cell, and the six neighboring cells are respectively a cell 1 to a cell 6. A neighboring cell may cause relatively high interference to an uplink signal of a user at an edge of the serving cell. To ensure accuracy of neighboring cell interference measurement by a zero power reference signal of each cell, subcarriers in which zero power reference signals of different cells are located may correspond to different frequency domain offsets.

In an actual application, for example, it may be preplanned that an RE of the zero power reference signal corresponding to the serving cell and an RE of the zero power reference signal corresponding to the neighboring cell are located in different subcarriers and/or located in different time domain symbols.

In an example, referring to FIG. 4, when the zero power reference signal of the serving cell of the terminal device occupies one RE, and the zero power reference signal of the neighboring cell of the serving cell of the terminal device occupies one RE, it may be specified that first subcarriers corresponding to the serving cell and the neighboring cell of the serving cell are different, where the first subcarrier is a subcarrier in which the zero power reference signal is located.

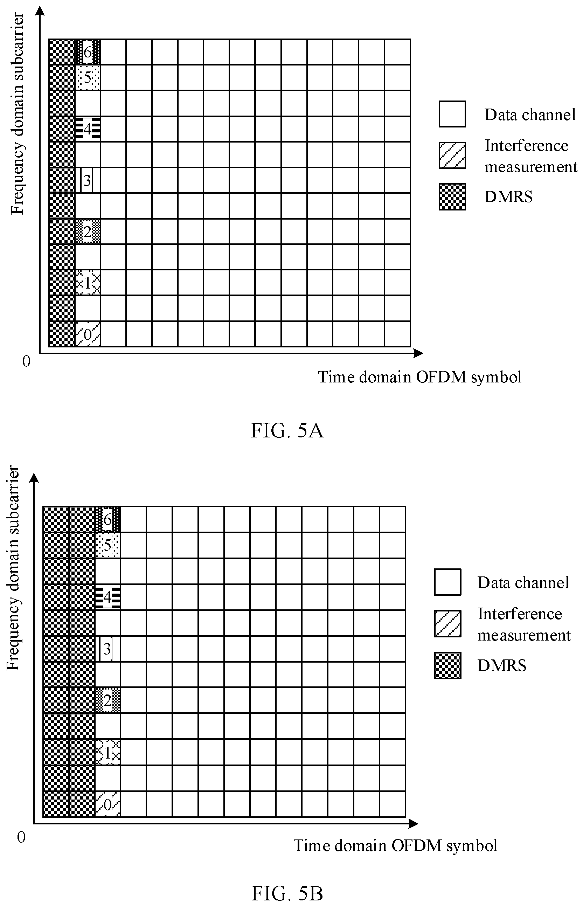

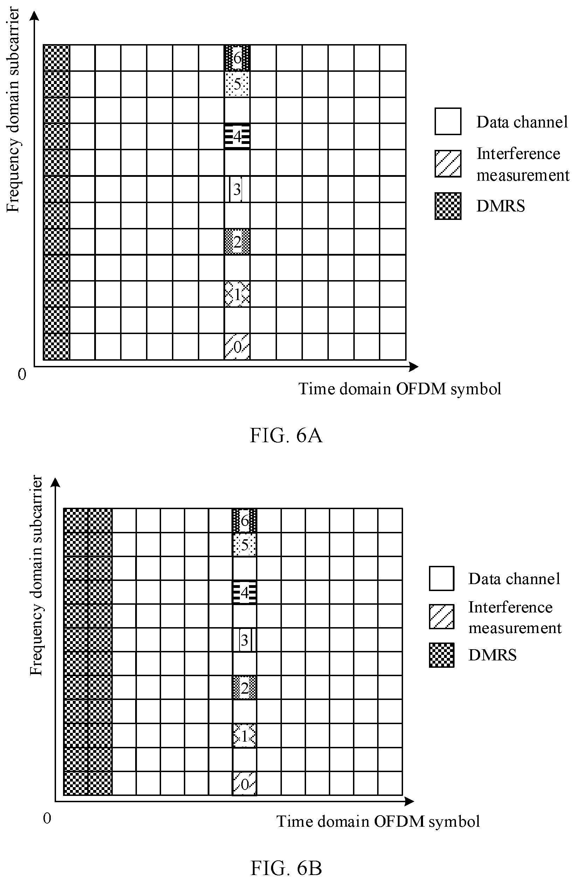

FIG. 5A to FIG. 6B are schematic diagrams 1 to 4 of patterns of zero power reference signals in a multi-cell scenario according to an embodiment of this application. As shown in FIG. 5A to FIG. 6B, the zero power reference signals corresponding to the cell 0 and the cell 1 respectively occupy one RE, and are respectively located in different subcarriers. In FIG. 5A and FIG. 5B, a time domain symbol in which the zero power reference signal is located is set close to the DMRS. In FIG. 6A and FIG. 6B, a time domain symbol in which the zero power reference signal is located is set far away from the DMRS. The RE of the DMRS in FIG. 5A and FIG. 6A occupies one time domain symbol, and the RE of the DMRS in FIG. 5B and FIG. 6B occupies two time domain symbols.

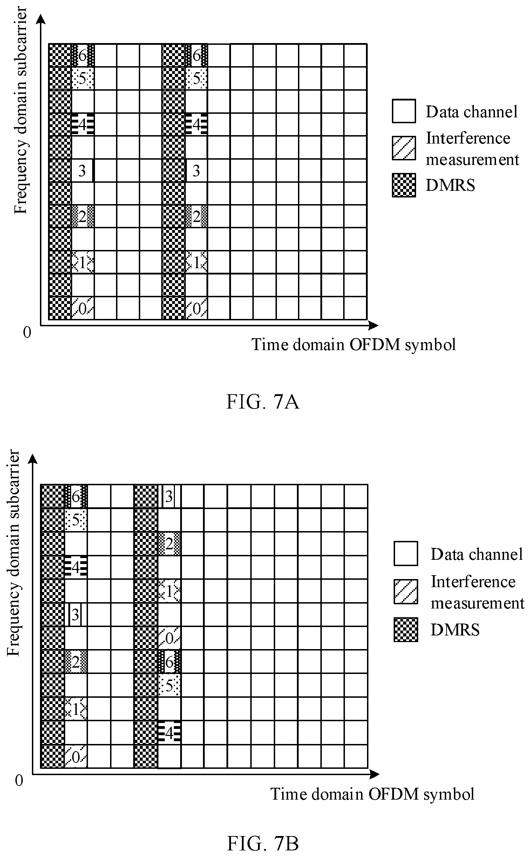

FIG. 7A and FIG. 7B are schematic diagrams 5 and 6 of patterns of zero power reference signals in a multi-cell scenario according to an embodiment of this application. As shown in FIG. 7A and FIG. 7B, in one time-frequency resource unit, a quantity of zero power reference signals corresponding to each cell is 2, and each zero power reference signal corresponding to the cell 0 and cell 1 occupies one RE and is located in different subcarriers. A quantity of DMRSs corresponding to each cell is 2, each DMRS occupies one time domain symbol, and a time domain symbol in which each zero power reference signal is located is set close to a time domain symbol of a corresponding DMRS. It should be noted that, for the two zero power reference signals corresponding to each cell, referring to FIG. 7A, subcarriers in which REs of the two zero power reference signals are located may be the same, or referring to FIG. 7B, REs of subcarriers in which the two zero power reference signals are located may be different.

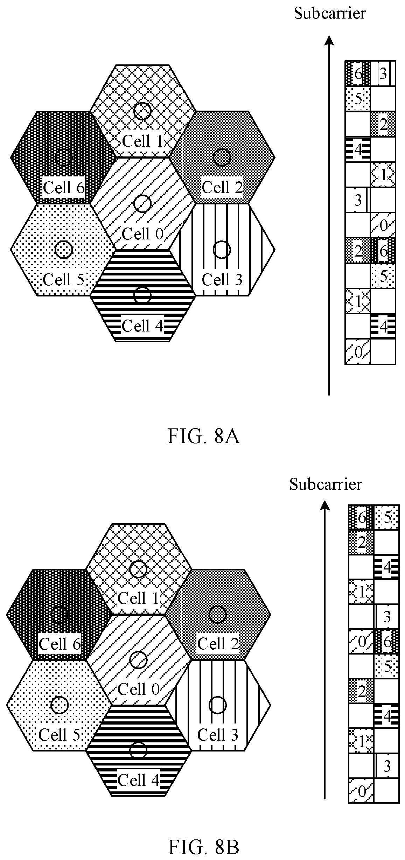

FIG. 8A is a schematic diagram 2 of distribution of time-frequency resources of zero power reference signals in a multi-cell scenario according to an embodiment of this application. FIG. 8B is a schematic diagram 3 of distribution of time-frequency resources of zero power reference signals in a multi-cell scenario according to an embodiment of this application.

In another example, as shown in FIG. 8A and FIG. 8B, for either of the serving cell of the terminal device and the neighboring cell of the serving cell as a target cell, a zero power reference signal corresponding to the target cell may occupy two REs, and a first subcarrier and a second subcarrier corresponding to the target cell are not adjacent to each other; and the first subcarrier and the second subcarrier are subcarriers in which the two REs corresponding to the target cell are located. For each time domain symbol in the time-frequency resource unit, REs occupied by zero power reference signals corresponding to different target cells but located in a same time domain symbol may be located in different subcarriers.

It should be noted that the two time domain symbols shown on a right side in FIG. 8A and FIG. 8B may be time domain symbols allowed to be occupied by the zero power reference signal. A left time domain symbol may be a symbol 1, and a right time domain symbol is a symbol 2, where the symbol 1 may be a start time domain symbol allowed to be occupied by the zero power reference signal.

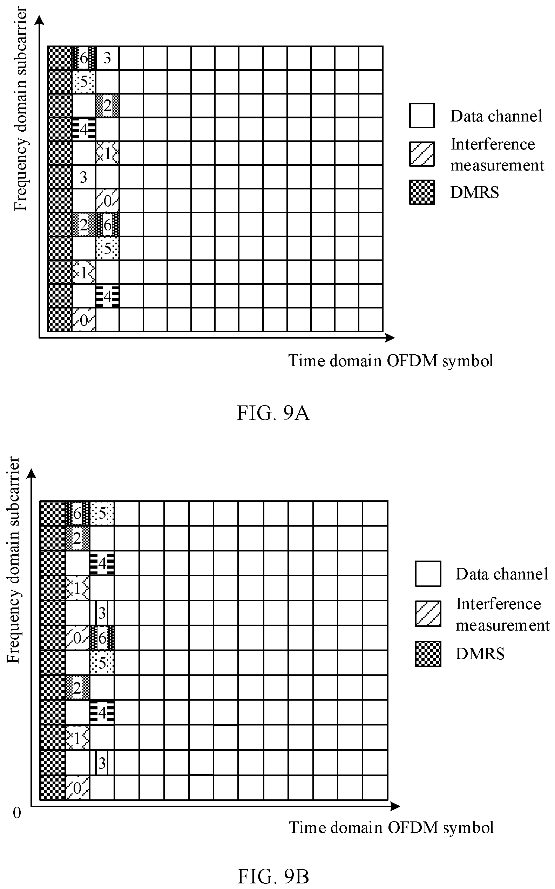

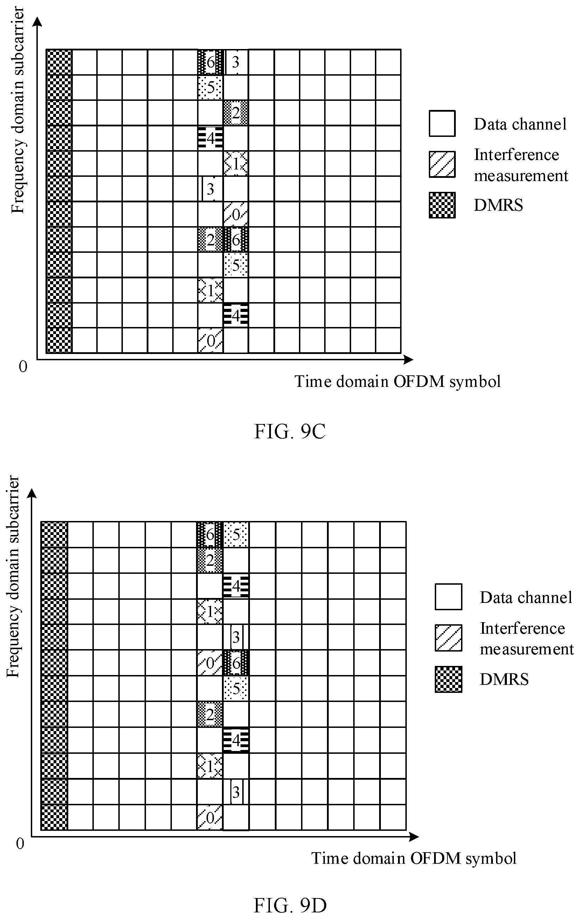

FIG. 9A to FIG. 9D are schematic diagrams 9 to 12 of patterns of zero power reference signals in a multi-cell scenario according to an embodiment of this application. As shown in FIG. 9A to FIG. 9D, each zero power reference signal corresponding to the cell 0 and the cell 1 occupies two REs, and two REs of a same cell are located in different subcarriers. In FIG. 9A and FIG. 9B, a time domain symbol in which the zero power reference signal is located is set close to the DMRS. In FIG. 9C and FIG. 9D, a time domain symbol in which the zero power reference signal is located is set far away from the DMRS.

In this embodiment of this application, a frequency domain offset (FreqOffset) of the first subcarrier corresponding to each target cell may be determined based on a cell identity (Cell ID, CID) of each target cell. For example, assuming that the time-frequency resource unit includes 12 subcarriers, the FreqOffset of the first subcarrier corresponding to each cell may be determined in the following manner:

when $mod(\ CID,\ Q) < 6$, $FreqOffset = mod(\ CID,\ Q) \times 2$; or

when $mod(\ CID,\ Q) = 6$, $FreqOffset = 11$ ,

where mod represents a modulo operation, Q is a total quantity of cells of the serving cell and the neighboring cell of the serving cell, Q is an integer greater than or equal to 2 and less than 7, and CID is an integer greater than or equal to 0.

Table 2-2 illustrates a group of first subcarriers of zero power reference signals determined based on cell identities.

**Table 2-2**

| Cell identity or cell number | Subcarrier of the zero power reference signal (mute RE subcarrier position, represented by a frequency domain offset) | Cell identity or cell number | Subcarrier of the zero power reference signal (mute RE subcarrier position, represented by a frequency domain offset) |
|---|---|---|---|
| Cell 0 | 0 | Cell 7 | 0 |
| Cell 1 | 2 | Cell 8 | 2 |
| Cell 2 | 4 | Cell 8 | 4 |
| Cell 3 | 6 | Cell 10 | 6 |
| Cell 4 | 8 | Cell 11 | 8 |
| Cell 5 | 10 | Cell 12 | 10 |
| Cell 6 | 11 | Cell 13 | 11 |

For the subcarrier positions of the zero power reference signals shown in Table 2-2, refer to FIG. 4 to FIG. 6A. In an actual application, when the zero power reference signal is configured to occupy one RE, that is, in a case of a single type, a position of a subcarrier occupied by the zero power reference signal in each PRB may be obtained by querying a predefined table by using a cell ID as an index.

In this embodiment of this application, when each zero power reference signal occupies two REs, a distribution manner of a time domain symbol in which the two REs of the zero power reference signal are located may be the first distribution manner or the second distribution manner, where

the first distribution manner is used to indicate that the two REs are located in two consecutive time domain symbols;

and
the second distribution manner is used to indicate that the two REs are located in one time domain symbol.

According to the invention, when the distribution manner of the time domain symbol in which the two REs are located is the second distribution manner, the time domain symbol in which the two REs are located may be determined based on a cell identity of the serving cell of the terminal device, where

when $CID \times 2T <$ SumCR, the time domain symbol in which the two REs are located is the start time domain symbol; or when SumCR $\leq CID \times 2T < 2 \times$ SumCR, the time domain symbol in which the two REs are located is the first time domain symbol after the start time domain symbol,
where CID is the cell identity, SumCR is a total quantity of subcarriers in one time-frequency resource unit, T is a quantity of subcarriers in separation, T is an integer greater than or equal to 1 or less than or equal to 6, and T is less than or equal to SumCR/Q.

According to the invention, when $CID \times 2T \geq 2 \times$ SumCR, the distribution manner of the time domain symbol in which the two REs are located may be set to the first distribution manner.

In this embodiment of this application, when the distribution manner of the time domain symbol in which the two REs are located is the first distribution manner, a quantity of subcarriers in separation between a first subcarrier and a second subcarrier in which the two REs are located is 1, 3, or 5. For example, if the quantity of subcarriers in separation is 5, refer to FIG. 8A, FIG. 9A, FIG. 9C, and Table 2-3.

In this embodiment of this application, when the distribution manner of the time domain symbol in which the two REs are located is the second distribution manner, a quantity of subcarriers in separation between a first subcarrier and a second subcarrier in which the two REs are located is 2, 4, or 6. For example, if the quantity of subcarriers in separation is 5, refer to FIG. 8B, FIG. 9B, FIG. 9D, and Table 2-4.

For example, in an optional implementation, if there are two subcarriers of the zero power reference signal corresponding to each cell, the subcarriers are respectively the first subcarrier and the second subcarrier. An identifier of the first subcarrier corresponding to the cell may be determined based on the cell identity of the cell, and an identifier of the second subcarrier corresponding to the cell may be a remainder of a sum of the identifier of the first subcarrier and a preset subcarrier offset W modulo 12. For example, W may be equal to 5. Refer to FIG. 5. It should be noted that, when REs occupied by zero power reference signals corresponding to a same cell are located in a same time domain symbol, this setting manner may be considered.

Table 2-3 illustrates that REs of zero power reference signals of each cell occupy two subcarriers on two time domain symbols.

**Table 2-3**

| Cell identity | First subcarrier | Second subcarrier | Cell identity | First subcarrier | Second subcarrier |
|---|---|---|---|---|---|
| Cell 0 | 0 | 0+5=5 | Cell 7 | 0 | 0+5=5 |
| Cell 1 | 2 | 2+5=7 | Cell 8 | 2 | 2+5=7 |
| Cell 2 | 4 | 4+5=9 | Cell 8 | 4 | 4+5=9 |
| Cell 3 | 6 | 6+5=11 | Cell 10 | 6 | 6+5=11 |
| Cell 4 | 8 | mod(8+5, 12)=1 | Cell 11 | 8 | mod(8+5, 12)=1 |
| Cell 5 | 10 | mod(10+5, 12)=3 | Cell 12 | 10 | mod(10+5, 12)=3 |
| Cell 6 | 11 | mod(11+5, 12)=4 | Cell 13 | 11 | mod(11+5, 12)=4 |

In another example, FIG. 6 is a schematic diagram 3 of distribution of subcarriers of zero power reference signals of a target cell and six neighboring cells, as shown in FIG. 6. Time-frequency resources of the zero power reference signals shown in the cell 0 to the cell 5 are two REs located in different subcarriers and located in a same time domain symbol.

For example, in an optional implementation, if there are two subcarriers of the zero power reference signal corresponding to each cell, and the time-frequency resource of the zero power reference signal corresponding to each cell is located in one time domain symbol, the subcarrier and the time domain symbol in which the time-frequency resource of the zero power reference signal corresponding to each cell is located may be separately determined.

Table 2-4 illustrates that REs of the zero power reference signal corresponding to each cell occupy two subcarriers in one time domain symbol.

**Table 2-4**

| Cell identity | Mute RE subcarrier position | Cell ID | Mute RE subcarrier position |
|---|---|---|---|
| Cell 0 | Symbol 1: (0, 6) | Cell 7 | Symbol 1: (0, 6) |
| Cell 1 | Symbol 1: (2, 8) | Cell 8 | Symbol 1: (2, 8) |
| Cell 2 | Symbol 1: (4, 10) | Cell 8 | Symbol 1: (4, 10) |
| Cell 3 | Symbol 2: (1, 7) | Cell 10 | Symbol 2: (1, 7) |
| Cell 4 | Symbol 2: (3, 9) | Cell 11 | Symbol 2: (3, 9) |
| Cell 5 | Symbol 2: (5, 11) | Cell 12 | Symbol 2: (5, 11) |
| Cell 6 | Symbol: (11) Symbol 2: (6) | Cell 13 | Symbol: (11) Symbol 2: (6) |

The symbol 1 is the first time domain symbol of the two time domain symbols allowed to be occupied by each zero power reference signal; and the symbol 2 is the second time domain symbol of the two time domain symbols allowed to be occupied by each zero power reference signal. "Symbol 1: (0, 6)" indicates that the two REs are located in two subcarriers whose frequency offsets are 0 and 6 on the first time domain symbol of the two time domain symbols allowed to be occupied.

In this embodiment of this application, in one time-frequency resource unit for sending the uplink signal, there are two zero power reference signals; and subcarriers in which time-frequency resources of the two zero power reference signals are located may be set to be the same or different.

Assuming that the zero power reference signal corresponding to each cell occupies one RE, when the subcarriers are set to be the same, refer to FIG. 7A for a pattern in which the zero power reference signal corresponding to each cell occupies one RE.

When the subcarriers are set to be different, the quantity of subcarriers in separation between the subcarriers in which the two zero power reference signals are located may be 1 or 3 or 5. For example, for a pattern in which the quantity of subcarriers in separation is 5, refer to FIG. 7B.

In this embodiment of this application, there are two PUSCH mapping types in an NR system: type A and type B. A main difference lies in a start position of a time domain symbol of a PUSCH in each slot and a quantity of scheduled time domain symbols. Table 3-1 illustrates two types of PUSCH resource allocation manner.

**Table 3-1**

| PUSCH mapping type | Normal cyclic prefix | | | Extended cyclic prefix | | |
|---|---|---|---|---|---|---|
| | S | L | S+L | S | L | S+L |
| Type A | 0 | {4, ..., 14} | {4, ..., 14} (repetition type A only) | 0 | {4, ..., 12} | {4, ..., 12} |
| Type B | {0, ..., 13} | {1, ..., 14} | {1, ...,14} for repetition type A, {1, ..., 27} for repetition type B | {0, ..., 11} | {1, ..., 12} | {1, ..., 12} |

S represents a start time domain symbol position, L represents a length of scheduled consecutive time domain symbols, and S+L represents a last time domain symbol position of the scheduled PUSCH.

A DMRS may be configured in the PUSCH, and the DMRS may be used for channel estimation and data demodulation. Table 3-2 is a configuration table of DMRS time domain symbol positions. (Refer to TS 38.212 Table 6.4.1.1.3-3.)

**Table 3-2**

| $l_d$ in symbols | DMRS positions $\bar{l}$ PUSCH mapping type A | | | | PUSCH mapping type B | | | |
|---|---|---|---|---|---|---|---|---|
| | dmrs-AdditionalPosition | | | | dmrs-AdditionalPosition | | | |
| | pos0 | pos1 | pos2 | pos3 | pos0 | pos1 | pos2 | pos3 |
| <4 | - | - | - | - | $l_0$ | $l_0$ | $l_0$ | $l_0$ |
| 4 | $l_0$ | $l_0$ | $l_0$ | $l_0$ | $l_0$ | $l_0$ | $l_0$ | $l_0$ |

(continued)

| $l_d$ in symbols | DMRS positions $\bar{l}$ | | | | | | | |
| --- | --- | --- | --- | --- | --- | --- | --- | --- |
| | PUSCH mapping type A | | | | PUSCH mapping type B | | | |
| | *dmrs-AdditionalPosition* | | | | *dmrs-AdditionalPosition* | | | |
| | *pos0* | *pos1* | *pos2* | *pos3* | *pos0* | *pos1* | *pos2* | *pos3* |
| 5 | $l_0$ | $l_0$ | $l_0$ | $l_0$ | $l_0$ | $l_0$, 4 | $l_0$, 4 | $l_0$, 4 |
| 6 | $l_0$ | $l_0$ | $l_0$ | $l_0$ | $l_0$ | $l_0$, 4 | $l_0$, 4 | $l_0$, 4 |
| 7 | $l_0$ | $l_0$ | $l_0$ | $l_0$ | $l_0$ | $l_0$, 4 | $l_0$, 4 | $l_0$, 4 |
| 8 | $l_0$ | $l_0$, 7 | $l_0$, 7 | $l_0$, 7 | $l_0$ | $l_0$, 6 | $l_0$, 3, 6 | $l_0$, 3, 6 |
| 9 | $l_0$ | $l_0$, 7 | $l_0$, 7 | $l_0$, 7 | $l_0$ | $l_0$, 6 | $l_0$, 6 | $l_0$, 3, 6 |
| 10 | $l_0$ | $l_0$, 9 | $l_0$, 6, 9 | $l_0$, 6, 9 | $l_0$ | $l_0$, 8 | $l_0$, 4, 8 | $l_0$, 3, 6, 9 |
| 11 | $l_0$ | $l_0$, 9 | $l_0$, 6 9 | $l_0$, 6, 9 | $l_0$ | $l_0$, 8 | $l_0$, 4, 8 | $l_0$, 3, 6, 9 |
| 12 | $l_0$ | $l_0$, 9 | $l_0$, 6, 9 | $l_0$, 5, 8, 11 | $l_0$ | $l_0$, 10 | $l_0$, 5, 10 | $l_0$, 3, 6, 9 |
| 13 | $l_0$ | $l_0$, 11 | $l_0$, 7, 11 | $l_0$, 5, 8, 11 | $l_0$ | $l_0$, 10 | $l_0$, 5, 10 | $l_0$, 3, 6, 9 |
| 14 | $l_0$ | $l_0$, 11 | $l_0$, 7, 11 | $l_0$, 5, 8, 11 | $l_0$ | $l_0$, 10 | $l_0$, 5, 10 | $l_0$, 3, 6, 9 |

where $l_0$ represents an offset of the first DMRS symbol relative to a start symbol on the scheduled PUSCH, to determine a position of a start symbol of the DMRS. It is configured by using a higher layer parameter *dmrs-TypeA-Position* in the type A PUSCH. Its value is 0 in the type B PUSCH, that is, the symbol starts from the first time domain symbol position of the PUSCH.

In an actual application, the time-frequency resource of the zero power reference signal may be set with reference to a configuration of the PUSCH or DMRS. For example, in the type B PUSCH, one DMRS occupies the first time domain symbol, and the second time domain symbol may be used for a zero power reference signal.

**Embodiment 3**

Based on the foregoing embodiment, this embodiment of this application provides a plurality of implementations of generating an uplink signal based on configuration information.

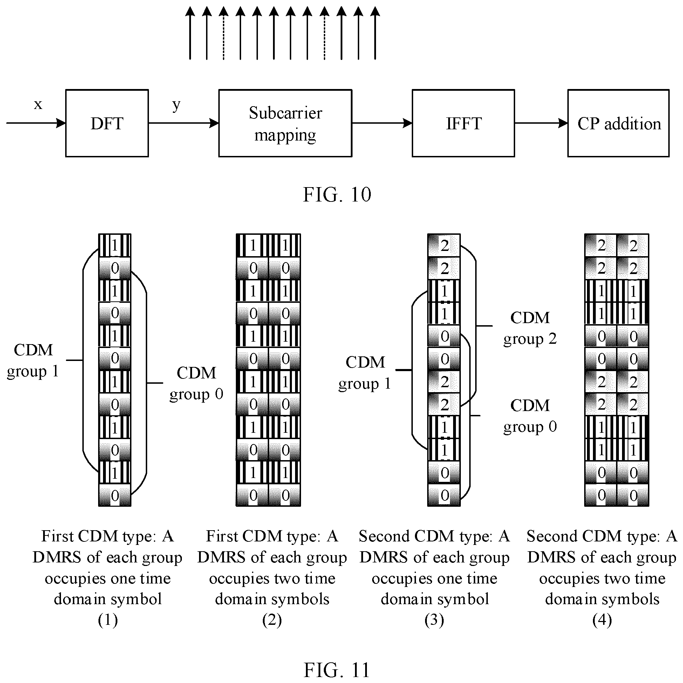

FIG. 10 is a schematic diagram of a mapping process according to this embodiment of this application.

For example, a time-frequency resource unit may include 12 subcarriers in frequency domain, and a time-frequency resource of a zero power reference signal includes P REs located in a to-be-processed time domain symbol in one time-frequency resource unit for sending the uplink signal.

In this embodiment of this application, subcarriers in which the P REs are located are $\{i_1, i_2, ..., i_P\}$, and other subcarriers than the subcarriers in which the P REs are located among the 12 subcarriers are $\{j_1, j_2, ... j_{12-P}\}$, where P is an integer greater than or equal to 1 and less than 12; the method further includes:

obtaining to-be-sent first data, where the first data is k-P data segments $x_1, x_2, ..., x_{k-P}$, and each RE is used to carry data in one data segment;

determining second data based on the first data and a DFT matrix $W_{12\times k}$, where the second data $x_{k-P+1}, ..., x_k$ satisfies:

$$\begin{bmatrix} x_{k-P+1} \\ \vdots \\ x_k \end{bmatrix} = \begin{bmatrix} w_{i_1,k-P+1} & \cdots & w_{i_1,k} \\ w_{i_2,k-P+1} & \cdots & w_{i_2,k} \\ \vdots & \vdots & \vdots \\ w_{i_P,k-P+1} & \cdots & w_{i_P,k} \end{bmatrix}^{-1} \begin{bmatrix} w_{j_1,1} & \cdots & w_{j_1,k-P} \\ \vdots & \vdots & \vdots \\ w_{j_{k-P},1} & \cdots & w_{j_{k-P},k-P} \end{bmatrix} \begin{bmatrix} x_1 \\ \vdots \\ x_{k-P} \end{bmatrix};$$

forming time domain data $\boldsymbol{x}$ by using the first data and the second data, where $\boldsymbol{x} = (x_1, x_2, ..., x_k)^T$;

performing a DFT on the time domain data $\boldsymbol{x}$ based on the DFT matrix $W_{12\times k}$, to obtain frequency domain data $\boldsymbol{y}$, where $\boldsymbol{y} = (y_1, y_2, y_3, ..., y_8, y_9, y_{10}, y_{11}, y_{12})^T$, and uplink signals $y_{i_1}, y_{i_2}, ..., y_{i_P}$ on the P REs are all 0; and

using the frequency domain data $\boldsymbol{y}$ as the uplink signal in the to-be-processed time domain symbol, where k is a quantity of time domain symbols in the time-frequency resource unit, and k is greater than p.

In this embodiment of this application, when the zero power reference signal occupies two REs on the to-be-processed time domain symbol, that is, P is equal to 2, an example of a signal processing procedure in uplink transmission in a single carrier system may be as follows:

For example, the zero power reference signal occupies the third RE and the ninth RE in the frequency domain symbol y, that is,

$$y = \left(y_1, y_2, 0, \ldots, y_8, 0, y_{10}, y_{11}, y_{12}\right)^T$$

Assuming that a time domain sampled signal transmitted in a transmission band is $x = (x_1, x_2, \ldots, x_k)^T$, and the DFT matrix is $W_{12 \times k}$,

$$\mathbf{y} = W_{12 \times k} \cdot \mathbf{x}$$

In this case, the third element and the ninth element in y need to be 0. Therefore, the following equation can be obtained:

$$\begin{bmatrix} 0 \\ 0 \end{bmatrix} = \begin{bmatrix} w^{3,1} & \cdots & w^{3,11} & w^{3,12} \\ w^{9,1} & \cdots & w^{9,11} & w^{9,12} \end{bmatrix} \begin{bmatrix} x_1 \\ \vdots \\ x_{10} \\ x_{11} \\ x_{12} \end{bmatrix}$$

Therefore, after calculation and collation, the following is obtained:

$$\begin{bmatrix} x_{11} \\ x_{12} \end{bmatrix} = \begin{bmatrix} w^{3,11} & w^{3,12} \\ w^{9,11} & w^{9,12} \end{bmatrix}^{-1} \begin{bmatrix} w^{3,1} & \ldots & w^{3,10} \\ w^{9,1} & \ldots & w^{9,10} \end{bmatrix} \begin{bmatrix} x_1 \\ \vdots \\ x_{10} \end{bmatrix}$$

In this embodiment of this application, every 12 to-be-sent signals actually include two redundant signals, that is, $x_{11}$ and $x_{12}$ are obtained based on a linear combination of signals $x_1$ to $x_{10}$. When $x_{11}$ and $x_{12}$ satisfy the linear combination, a zero power reference signal, that is, a mute RE, may be sent on frequency resources of $y_3$ and $y_9$. In this way, a gNB is enabled to perform neighboring cell interference measurement in an uplink transmission process in a single carrier system.

The single carrier system can be implemented based on the implementation of generating the uplink signal according to this embodiment of this application, and further, an objective of maintaining a relatively small peak-to-average power ratio (Peak to Average Power Ratio, PAPR) is achieved.

**Embodiment 4**

On a basis of the foregoing embodiment, this embodiment of this application further provides an optional implementation of a range of time-frequency resources of a DMRS and a zero power reference signal in a group of uplink signals.

In this embodiment of this application, a terminal device may send, to a network device, an uplink signal including a DMRS, where the DMRS may occupy one or more REs in a time-frequency resource unit for sending an uplink signal. For example, an RE occupied by the DMRS may be located in one or more subcarriers in one or more time domain symbols. It should be noted that, in a time domain symbol in which the RE occupied by the DMRS is located, an RE other than that of the DMRS may be set as an idle RE or a data RE. In this embodiment of this application, transmit power within a time-frequency resource range corresponding to the idle RE in the uplink signal is zero. The data RE is an RE used to transmit data.

In this embodiment of this application, a zero power reference signal may be set in the time-frequency resource unit for sending the uplink signal, or no zero power reference signal may be set. When the uplink signal includes the DMRS but does not include the zero power reference signal, the time-frequency resource in which the DMRS is located may be the same as the time-frequency resource in which the DMRS is located in various patterns including both the DMRS and the zero power reference signal that are shown in the accompanying drawings in the embodiments of this application. This means that the RE in which the zero power reference signal is located may be a data RE or an idle RE. For example, an RE located in a same time domain symbol as the DMRS may be an idle RE or a data RE, and an RE located in a time domain symbol different from the DMRS may be a data RE. In this embodiment of this application, unless otherwise specified, an RE other than an RE occupied by the zero power reference signal in the time domain symbol in which the zero power reference signal is located is a data RE. The following describes the zero power reference signal and the DMRS in the uplink signal by using examples with reference to the accompanying drawings.

In this embodiment of this application, the time-frequency resource of the DMRS may be determined from a group resource set based on a first identifier corresponding to the terminal device, the group resource set includes a plurality of group resources, different first identifiers correspond to different group resources in the group resource set, and at least two of the plurality of group resources are located in different time domain symbols.

DMRSs corresponding to different first identifiers are located in different time domain symbols and/or subcarriers.

It should be noted that, in an application example, by planning the first identifier corresponding to the DMRS, time domain symbols and/or subcarriers in which time-frequency resources occupied by DMRSs corresponding to different first identifiers are located may be different, so that DMRSs of a plurality of terminal devices are sent within a range of a same time-frequency resource.

In this embodiment of this application, for example, the first identifier may be an identifier of a code division multiplexing group (code division multiplexing group, CDM group) corresponding to a DMRS corresponding to the terminal device. In this embodiment of this application, the identifier of the code division multiplexing group may be referred to as a CDM group ID. A DMRS in a time-frequency resource unit for sending an uplink signal may correspond to one CDM group ID. In this embodiment of this application, it should be noted that a set of time-frequency resources of DMRSs corresponding to all CDM groups is a group resource set, and a resource in the group resource set is not used to transmit data. In other words, the CDM group mentioned in this embodiment of this application corresponds to a CDM group (that is, a DMRS CDM group without data) that is not used to transmit data.

In this embodiment of this application, a time domain symbol and/or a subcarrier in which the DMRS in the uplink signal is located may be determined based on an identifier of a CDM group corresponding to the terminal device and a CDM configuration type.

In this embodiment of this application, the time-frequency resource in which the zero power reference signal is located may be determined based on a code division multiplexing (code division multiplexing, CDM) configuration type of the DMRS and/or an identifier of the CDM group.

It should be noted that the CDM group ID corresponding to the DMRS may be a CDM group ID corresponding to the terminal device that sends the DMRS.

For one cell, terminal devices in the cell may be grouped into a plurality of CDM groups. DMRSs sent by terminal devices in different CDM groups are located in different time-frequency resources, and DMRSs sent by terminal devices in a same CDM group are located in a same time-frequency resource.

For example, DMRSs sent by terminal devices in different CDM groups may be located in different REs. In other words, interference between DMRSs sent by terminal devices in different CDM groups is avoided in a time division and/or frequency division mode. DMRSs sent by terminal devices belonging to a same CDM group are located in a same RE, each CDM group corresponds to one orthogonal code sequence, and different UEs in the same CDM group separately send DMRSs by using different orthogonal codes in the orthogonal code sequence. In other words, interference between DMRSs of different UEs in the same CDM group is avoided in the code division mode.

It should also be noted that the uplink signal may be a signal sent by using one antenna port of the terminal device. In this case, the CDM group corresponding to the terminal device may be a CDM group corresponding to the antenna port of the terminal device. Each antenna port of the terminal device may correspond to different CDM groups, or each antenna port of the terminal device may correspond to different orthogonal codes in the CDM groups. For example, an antenna port 0 and an antenna port 1 of the terminal device may correspond to a group 0, and an antenna port 2 and an antenna port 3 may correspond to a group 1. The first identifier may be a CDM group ID. In an example, the CDM group ID corresponding to the terminal device may be a CDM group ID corresponding to a DMRS sent by an antenna port in the terminal device.

In this embodiment of this application, configuration information of the zero power reference signal supporting the CDM group may include at least one of the following information:

in any time-frequency resource unit for sending the uplink signal, a configuration indication about whether the zero power reference signal supports a code division multiplexing group CDM group, where the configuration indication about whether the zero power reference signal supports the CDM group is used to indicate whether to configure, based on the time-frequency resource in which the DMRS in the uplink signal is located or a CDM configuration type of the DMRS, the time-frequency resource in which the zero power reference signal is located;

the CDM configuration type of the DMRS, where the CDM configuration type of the DMRS includes a first CDM type, a second CDM type, and a third CDM type, and when the CDM configuration type of the DMRS is the third CDM type, the time-frequency resource of the DMRS is determined from a group resource set based on a CDM group ID corresponding to the DMRS, the group resource set includes a plurality of group resources, different CDM group IDs correspond to different group resources in the group resource set, and at least two of the plurality of group resources are located in different time domain symbols;

a configuration mode of the zero power reference signal supporting the CDM group, where the configuration mode includes a first configuration mode and a second configuration mode, an RE occupied by the zero power reference signal in the first configuration mode and an RE occupied by the DMRS are located in a same subcarrier, a subcarrier in which the zero power reference signal in the second configuration mode is located is a set of subcarriers in which DMRSs of all CDM groups corresponding to the CDM configuration type are located, and the subcarriers in which the DMRSs of all the CDM groups are located are a part of subcarriers in the time-frequency resource unit for sending the uplink signal;

a start time domain symbol occupied by a zero power reference signal of each CDM group;

a quantity of time domain symbols occupied by the zero power reference signal of each CDM group; and

a quantity of group resource units in each group resource.

DMRSs included in each group resource unit occupy consecutive time domain symbols and/or consecutive subcarriers.

In this embodiment of this application, when the configuration indication about whether the zero power reference signal supports the code division multiplexing group CDM group is yes, the terminal device may determine, based on the time-frequency resource of the DMRS or based on the CDM configuration type of the DMRS in the uplink signal including the zero power reference signal, the time-frequency resource in which the zero power reference signal is located. When the configuration indication about whether the zero power reference signal supports the code division multiplexing group CDM group is no, the terminal device may determine, based on another configuration mode provided in this embodiment of this application or another parameter in the configuration information, the time-frequency resource in which the zero power reference signal is located. For example, the start time domain symbol of the zero power reference signal may be used as the first time domain symbol after the time domain symbol in which the DMRS is located, and a quantity of time domain symbols occupied by the zero power reference signal is 1 or 2. A subcarrier in which the zero power reference signal is located is the $0^{th}$ subcarrier or the $5^{th}$ subcarrier.

In this embodiment of this application, in frequency domain, the subcarrier in which the zero power reference signal is located may be determined based on at least one of the following information: the time-frequency resource of the DMRS in the uplink signal that includes the zero power reference signal, the CDM group ID corresponding to the DMRS in the uplink signal, and the CDM configuration type. In time domain, the start time domain symbol in which the zero power reference signal is located may include another time domain symbol adjacent to or not adjacent to the time domain symbol in which the DMRS is located. For example, the start time domain symbol in which the zero power reference signal is located may include the first time domain symbol and/or the second time domain symbol after the time domain symbol in which the DMRS is located; or the time domain symbol in which the zero power reference signal is located may be another time domain symbol determined based on the CDM group ID and/or the CDM configuration type. A quantity of time domain symbols in which the zero power reference signal is located may be 1, 2, 3, 4, 6, or the like. In addition, a time-frequency resource position occupied by the zero power reference signal may be arbitrarily configured by the network device by using signaling. For example, in frequency domain, at least one subcarrier position may be configured in each time-frequency resource unit as a position of the zero power reference signal. In time domain, a quantity and a position of at least one time domain symbol may be configured in each time-frequency resource unit, and configured by the network device by using signaling, including higher layer signaling (for example, RRC signaling). A quantity of time domain symbols occupied by each zero power reference signal may be the same as a quantity of time domain symbols occupied by each DMRS. In an example, the quantity of time domain symbols occupied by the zero power reference signal may be determined based on the quantity of time domain symbols occupied by each DMRS in DMRS configuration information. The following uses an example for description with reference to the CDM configuration type and the CDM group ID.

In this embodiment of this application, there are a plurality of implementations of determining, based on the information such as the CDM configuration type and the CDM group ID corresponding to the DMRS, the time-frequency resource in which the zero power reference signal is located.

In an optional implementation of determining the zero power reference signal, the subcarrier in which the zero power reference signal is located may be the same as the subcarrier in which the DMRS is located, and the subcarrier in which the DMRS is located may be determined based on the CDM group ID corresponding to the terminal device sending the DMRS. In other words, the subcarrier in which the zero power reference signal is located may be determined based on the CDM group ID corresponding to the terminal device that sends the zero power reference signal and the DMRS.

The following describes various configuration modes of the subcarrier in which the DMRS is located. The subcarrier in which the zero power reference signal is located may be determined in a same manner as the manner of determining, based on the CDM group ID, the subcarrier in which the DMRS is located.

In this embodiment of this application, the subcarrier in which the DMRS is located may be determined based on the CDM configuration type and the CDM group ID of the DMRS. The CDM configuration type of the DMRS may be the first CDM type, the second CDM type, or the third CDM type.

Table 4-1 illustrates the CDM configuration type.

**Table 4-1**

| CDM configuration type | First CDM type (Type 1 DMRS) | Second CDM type (Type 2 DMRS) | Third CDM type (Type 3 DMRS) |
|---|---|---|---|
| Quantity of supported CDM groups | 2 | 3 | 6 (scalable) |
| Group ID | 0 and 1 | 0, 1, and 2 | 0 to 6 |
| Condition that an identifier of a subcarrier in which a DMRS of each CDM group is located satisfies (for example, one time-frequency resource unit includes 12 subcarriers) | Example: A remainder of a subcarrier offset modulo 2 is equal to the CDM group ID. | Example: A remainder of a subcarrier offset modulo 6 is equal to the CDM group ID*2 or the CDM group ID*2+1. | The group resource set includes group resources corresponding to all CDM group IDs; group resources corresponding to each CDM group ID are different or partially different; quantities of time domain symbols and subcarriers occupied by group resources corresponding to each CDM group ID are the same;<br><br>each group resource includes two to four group resource units; and<br>time-frequency resources occupied by group resource units corresponding to all the CDM groups are arranged by first selecting different REs in frequency domain and then selecting different REs in time domain. Each group resource unit occupies one or two consecutive time domain symbols and one or two consecutive subcarriers. |

A quantity of time domain symbols occupied by the zero power reference signal may be one or two. The start time domain symbol of the time domain symbols allowed to be occupied is the first time domain symbol after the time domain symbol occupied by the DMRS.

In an example, a quantity of time domain symbols occupied by the zero power reference signal may be the same as a quantity of time domain symbols occupied by the DMRS.

In an optional implementation, the DMRS configuration information may include information such as a quantity of subcarriers in separation of the DMRS. The quantity of subcarriers in separation is a quantity of subcarriers in separation between a plurality of subcarriers in which DMRSs of a same CDM group are located. For example, if subcarriers in which DMRSs corresponding to a group ID are located are 3, 7, and 11, the quantity of subcarriers in separation is 3.

In this embodiment of this application, when the CDM configuration type is the first CDM type and the second CDM type, DMRSs corresponding to different group IDs are located in different subcarriers. The time-frequency resource of the zero power reference signal may be configured in the first configuration mode or the second configuration mode. When the CDM configuration type is the third CDM type, the time-frequency resource of the DMRS is determined from a group resource set based on a CDM group ID corresponding to the DMRS, the group resource set includes a plurality of group resources, different CDM group IDs correspond to different group resources in the group resource set, and at least two of the plurality of group resources are located in different time domain symbols. For example, a time domain symbol in which a DMRS corresponding to a first CDM group is located is different from a time domain symbol in which a DMRS corresponding to a second CDM group is located, where the first CDM group is the CDM group corresponding to the terminal device, and the second CDM group is at least one other CDM group of at least two CDM groups that include the first CDM group and that are supported by the third CDM type.

In this embodiment of this application, DMRSs corresponding to different CDM groups are located in different subcarriers, and there may be a plurality of implementations. The following uses a time-frequency resource unit including 12 subcarriers as an example for description.

FIG. 11 is a schematic diagram of a group of subcarriers in which DMRSs configured based on CDM groups are located.

In the first CDM type, one cell may support two CDM groups: a CDM group 0 and a CDM group 1.

As shown in (1) and (2) in FIG. 11, a DMRS sent by a terminal device belonging to the CDM group 0 is located in a subcarrier whose subcarrier index is an even number, and a DMRS sent by the terminal device belonging to the CDM group 0 is located in a subcarrier whose subcarrier index is an odd number.

As shown in (1) in FIG. 11, an RE occupied by a DMRS is located in one time domain symbol, that is, a configuration type of a quantity of time domain symbols of the DMRS is a single type, and a DMRS of a terminal device in each CDM group occupies six REs. As shown in (2) in FIG. 11, REs occupied by a DMRS are located in two adjacent time domain symbols, that is, a configuration type of a quantity of time domain symbols of the DMRS is a double type, and a DMRS of a terminal device in each CDM group occupies 12 REs.

In the second CDM type, one cell may support three CDM groups: a CDM group 0, a CDM group 1, and a CDM group 2. A subcarrier in which a DMRS is located is all subcarriers whose remainders of subcarrier offsets modulo 6 are equal to the CDM group ID*2 or the CDM group ID*2+1.

As shown in (3) and (4) in FIG. 11, DMRSs sent by a terminal device belonging to the CDM group 0 are located in all subcarriers whose remainders of subcarrier offsets modulo 3 are 0 and 1. DMRSs sent by a terminal device belonging to the CDM group 1 are located in all subcarriers whose subcarrier offsets are 2 and 3. DMRSs sent by a terminal device belonging to the CDM group 2 are located in all subcarriers whose subcarrier offsets are 4 and 5.

As shown in (3) in FIG. 11, an RE occupied by a DMRS is located in one time domain symbol, that is, a configuration type of a quantity of time domain symbols of the DMRS is a single type, and a DMRS of a terminal device in each CDM group occupies four REs. As shown in (4) in FIG. 11, REs occupied by a DMRS are located in two adjacent time domain symbols, that is, a configuration type of a quantity of time domain symbols of the DMRS is a double type, and a DMRS of a terminal device in each CDM group occupies eight REs.

It should be noted that a maximum quantity of terminal devices that can be supported by the two CDM configuration types is a product of a maximum quantity of terminal devices supported by each CDM group and a quantity of CDM groups. A maximum quantity of terminal devices that can be supported by each CDM group is a quantity of orthogonal codes in an orthogonal code sequence multiplied by a quantity of time domain symbols.

The following uses an example in which the quantity of orthogonal codes in the orthogonal code sequence is 2 for description. When the quantity of time domain symbols of the DMRS is set to the single type, the maximum quantity of terminal devices that can be supported by each CDM group is 2*1, that is, 2. When the quantity of time domain symbols of the DMRS is set to the double type, multiplexing by two UEs may also be implemented on two adjacent time domain symbols by using time domain orthogonal codes. Therefore, the double type can support multiplexing by UEs twice as many as those supported by the single type. Based on this, the maximum quantity of terminal devices that can be supported by each CDM group is 2*2, that is, 4.

Table 4-2 illustrates a maximum quantity of terminal devices that can be supported by each CDM configuration type when the quantity of orthogonal codes in the orthogonal code sequence is 2.

**Table 4-2**

| For example, the quantity of orthogonal codes in the orthogonal code sequence is 2. | Configuration type of the quantity of time domain symbols | Maximum quantity of antenna ports supported by each CDM group | Quantity of supported CDM groups | Quantity of UEs that support multiplexing of the time-frequency resource of the DMRS |
|---|---|---|---|---|
| First CDM type | Single | 2*1=2 | 2 | 2*2=4 |
| | Double | 2*2=4 | 2 | 4*2=8 |
| Second CDM type | Single | 2*1=2 | 3 | 2*3=6 |
| | Double | 2*2=4 | 3 | 4*3=12 |

When one terminal device corresponds to transmission of one single stream, one terminal device corresponds to one antenna port, and a maximum quantity of antenna ports supported by each CDM group is a maximum quantity of terminal devices supported by each CDM group.

As shown in the related description of the first CDM type in Table 1, in the pattern shown in (1) in FIG. 11, a maximum quantity of terminal devices that can be supported by each CDM group is 2, a quantity of CDM groups supported by the first CDM type is 2, and a maximum quantity of antenna ports that can be supported by a time-frequency resource of a DMRS of the single type is 4.

As shown in the related description of the first CDM type in Table 1, in the pattern shown in (2) in FIG. 11, a maximum quantity of terminal devices that can be supported by each CDM group is 4, a quantity of CDM groups supported by the first CDM type is 2, and a maximum quantity of antenna ports that can be supported by a time-frequency resource of a DMRS of the double type is 8.

As shown in the related description of the second CDM configuration type or the second CDM type in Table 1, in the pattern shown in (3) in FIG. 11, a maximum quantity of terminal devices that can be supported by each CDM group is 2, a quantity of CDM groups supported by the second CDM type is 3, and a maximum quantity of antenna ports that can be supported by a time-frequency resource of a DMRS of the single type is 6.

As shown in the related description of the second CDM type in Table 1, in the pattern shown in (3) in FIG. 11, a maximum quantity of terminal devices that can be supported by each CDM group is 4, a quantity of CDM groups supported by the second CDM type is 3, and a maximum quantity of antenna ports that can be supported by a time-frequency resource of a DMRS of the single type is 12.

In a second optional implementation of configuring the zero power reference signal based on the CDM group ID, the subcarrier in which the zero power reference signal is located may be a set of subcarriers in which all DMRSs corresponding to the CDM configuration type are located, where the subcarrier in which the zero power reference signal is located is a part of subcarriers in the time-frequency resource unit carrying the uplink signal. In this case, subcarriers in which DMRSs corresponding to different group IDs are located may be the same or different.

In an example, a configuration mode of the zero power reference signal supporting the CDM group is the second configuration mode; the CDM configuration type of the DMRS is the first CDM type or the second CDM type, where DMRSs corresponding to different group IDs are located in different subcarriers; the subcarrier in which the zero power reference signal is located includes a subcarrier in which DMRSs of all CDM groups corresponding to the CDM configuration type are located; and a start time domain symbol in which an RE occupied by the zero power reference signal is located is the first time domain symbol after a time domain symbol in which the DMRS is located or any time domain symbol not adjacent to the time domain symbol occupied by the DMRS.

In still another example, a configuration mode of the zero power reference signal supporting the CDM group is the second configuration mode; the CDM configuration type of the DMRS is the third CDM type; and the time-frequency resource in which the zero power reference signal is located includes a set of time-frequency resources in which DMRSs of all CDM groups corresponding to the CDM configuration type are located except the time-frequency resource in which the DMRS of the uplink signal is located, the time-frequency resource of the DMRS is determined from a group resource set based on a CDM group ID corresponding to the DMRS, the group resource set includes a plurality of group resources, different CDM group IDs correspond to different group resources in the group resource set, at least two of the plurality of group resources are located in different time domain symbols, and all subcarriers in which the DMRSs of all the CDM groups are located are a part of subcarriers in the time-frequency resource unit for sending the uplink signal.

In this embodiment of this application, the subcarrier in which the zero power reference signal is located is a part of subcarriers in the time-frequency resource unit for sending the uplink signal.

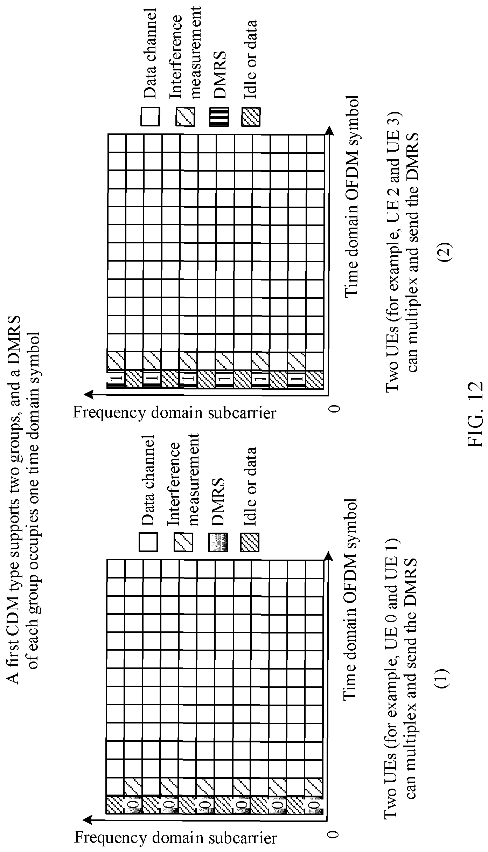

FIG. 12 to FIG. 15(3) are schematic diagrams of patterns of zero power reference signals configured in the first configuration mode according to an embodiment of this application.

In an example of an actual application, the zero power reference signal may use the first configuration mode, and the CDM configuration type of the DMRS may be the first CDM type or the second CDM type.

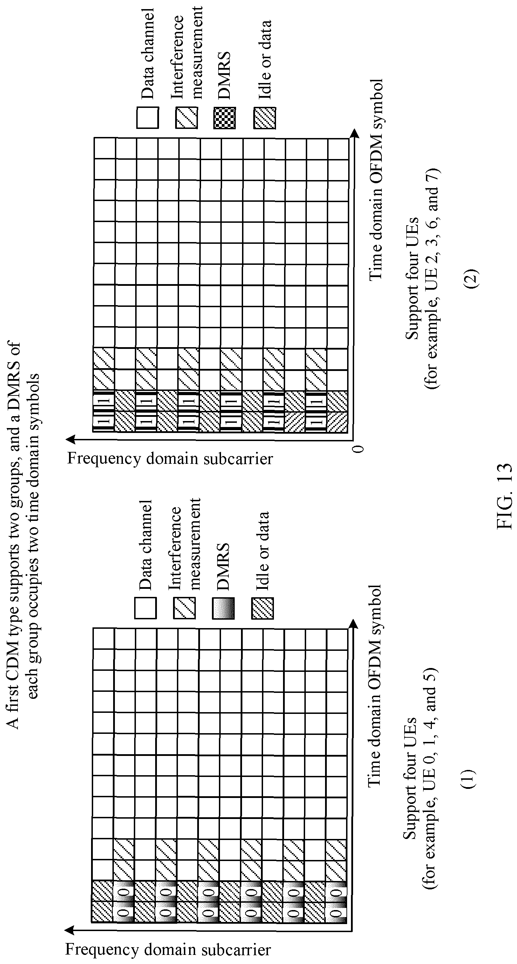

When the CDM configuration type of the DMRS is the first CDM type, referring to FIG. 12 and FIG. 13, the subcarrier in which the zero power reference signal is located includes all subcarriers that satisfy a first condition, where the first condition is that remainders of subcarrier offsets of all subcarriers modulo 2 are equal to the CDM group ID; and the zero power reference signal in FIG. 12 occupies one time domain symbol, and the zero power reference signal in FIG. 13 occupies two time domain symbols.

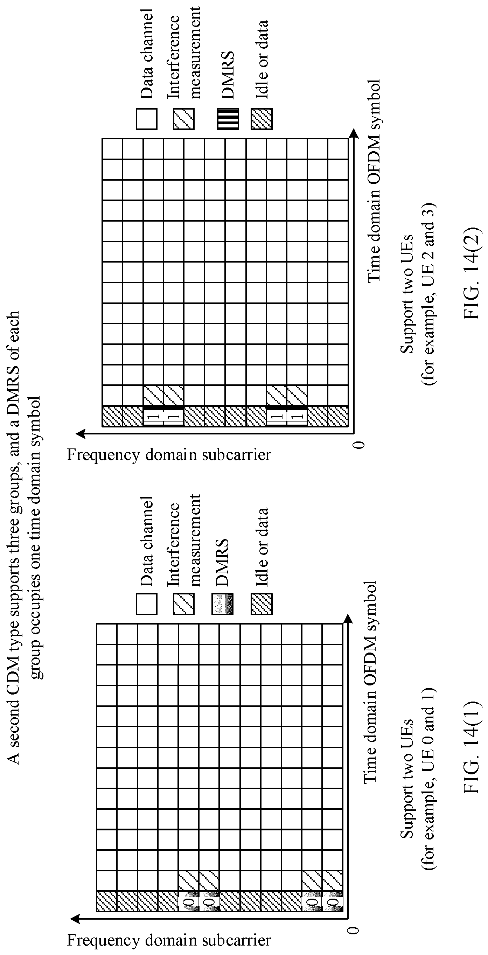

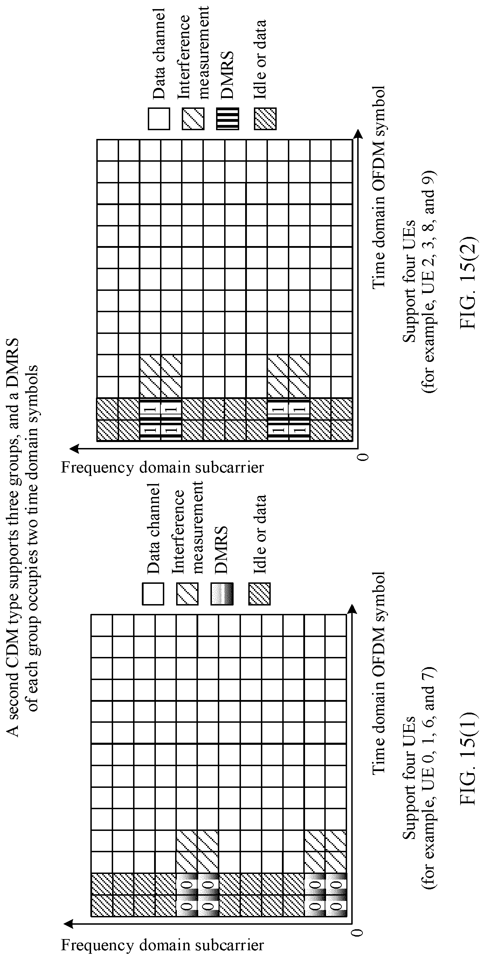

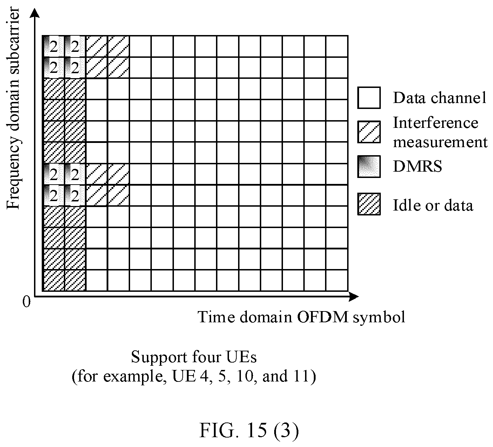

When the CDM configuration type of the DMRS is the second CDM type, referring to FIG. 14(1) to FIG. 14(3) and FIG. 15(1) to FIG. 15(3), the subcarrier in which the zero power reference signal is located includes all subcarriers that satisfy a second condition, where the second condition is that remainders of subcarrier offsets of all subcarriers modulo 6 are equal to the CDM group ID*2 or the CDM group ID*2+1. The zero power reference signal in FIG. 14(1) to FIG. 14(3) occupies one time domain symbol, and the zero power reference signal in FIG. 15(1) to FIG. 15(3) occupies two time domain symbols.

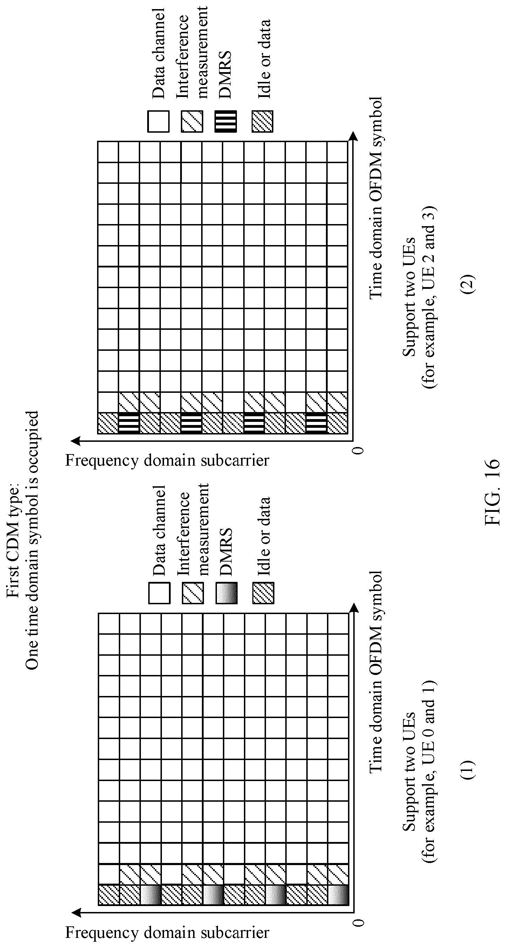

FIG. 16 to FIG. 22(6) are schematic diagrams of patterns of zero power reference signals configured in the second configuration mode according to an embodiment of this application.

In another example of an actual application, the zero power reference signal uses the second configuration mode, and the CDM configuration type of the DMRS is the first CDM type, the second CDM type, or the third CDM type.

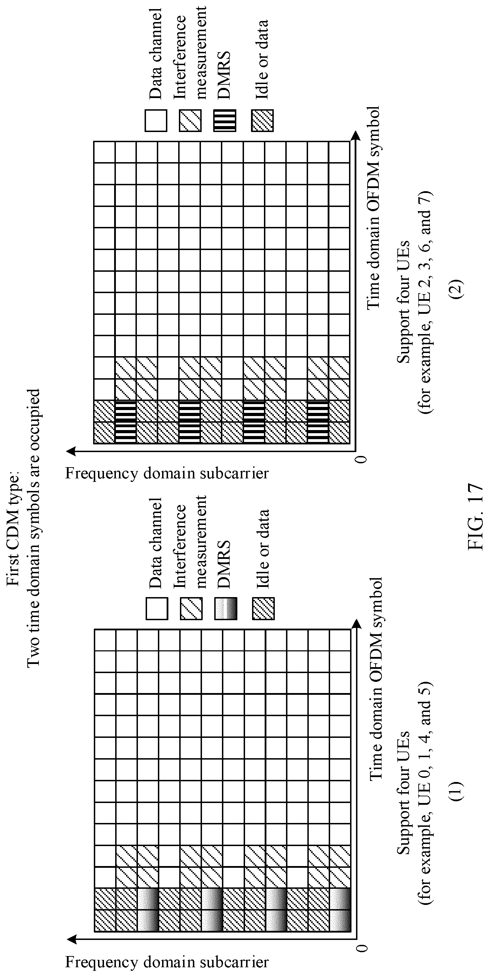

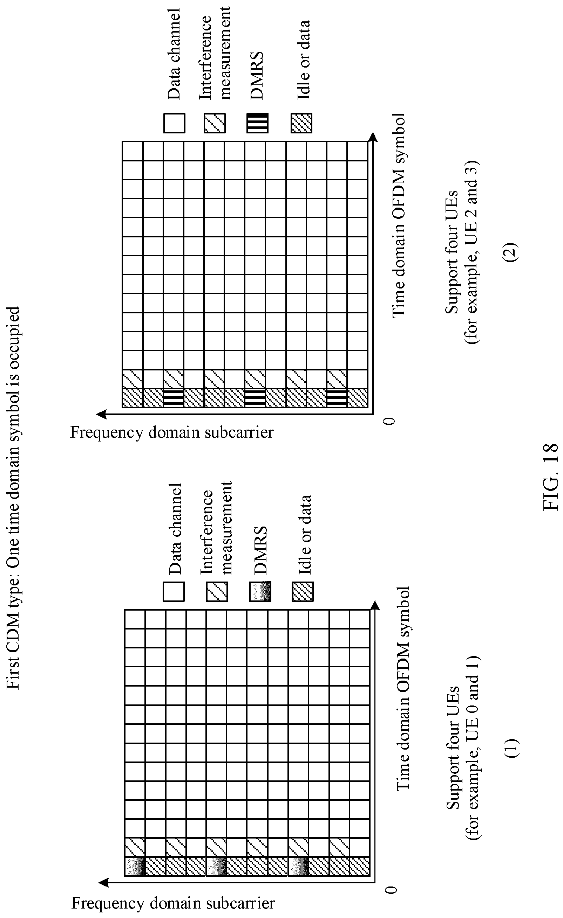

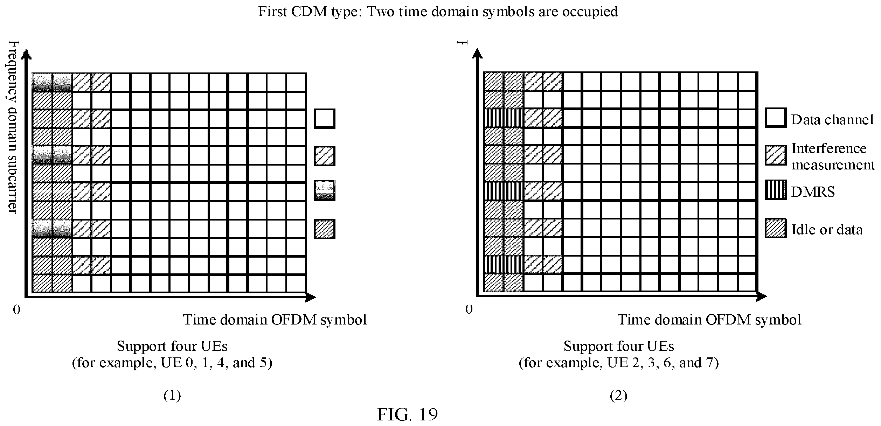

When the CDM configuration type of the DMRS is the first CDM type, referring to FIG. 16, FIG. 17, FIG. 18, and FIG. 19, the subcarrier in which the zero power reference signal is located is all subcarriers in which DMRSs of all CDM group corresponding to the first CDM configuration type are located. The zero power reference signal in FIG. 16 and FIG. 18 occupies one time domain symbol, and the zero power reference signal in FIG. 17 and FIG. 19 occupies two time domain symbols.

It should be noted that, in RBs shown in FIG. 18 and FIG. 19, a plurality of adjacent subcarriers in which DMRSs corresponding to each group ID are located are separated by a same quantity of subcarriers. In FIG. 18, adjacent subcarriers in which DMRSs corresponding to a same group ID are located are separated by three subcarriers; adjacent subcarriers in which DMRSs corresponding to different group IDs are located are separated by one or more subcarriers; and in FIG. 18, adjacent subcarriers in which DMRSs corresponding to different group IDs are located are separated by one subcarrier. It should be noted that the DMRS configuration information may include a quantity of subcarriers in separation.

When the CDM configuration type of the DMRS is the second CDM type, the subcarrier in which the zero power reference signal is located is all subcarriers in which DMRSs of all CDM group IDs corresponding to the second CDM configuration type are located. All subcarriers in which all DMRSs are located are a part of subcarriers in one RB.

When the CDM configuration type of the DMRS is the third CDM type, the time-frequency resource in which the zero power reference signal is located includes a set of time-frequency resources in which DMRSs of all CDM groups corresponding to the CDM configuration type are located except the time-frequency resource in which the DMRS of the uplink signal is located, and all subcarriers in which the DMRSs of all the CDM groups are located are a part of subcarriers in the time-frequency resource unit for sending the uplink signal.

In an example, each group resource includes at least two group resource units; the at least two group resource units occupy a same time domain symbol, and occupy different subcarriers; each group resource unit occupies at least one time domain symbol; each group resource unit occupies at least one subcarrier; and all subcarriers in which group resource units corresponding to all the CDM groups are located are a part of subcarriers in the time-frequency resource unit.

In this embodiment of this application, the time-frequency resource unit for sending the uplink signal that includes the DMRS is a resource block RB, and any RB includes two, three, or four group resource units; each group resource unit occupies two consecutive time domain symbols; each group resource unit occupies two consecutive subcarriers; a quantity of time domain symbols occupied by group resource units of all CDM group IDs is 6; and a quantity of subcarriers occupied by the group resource units of all the CDM group IDs is 4.

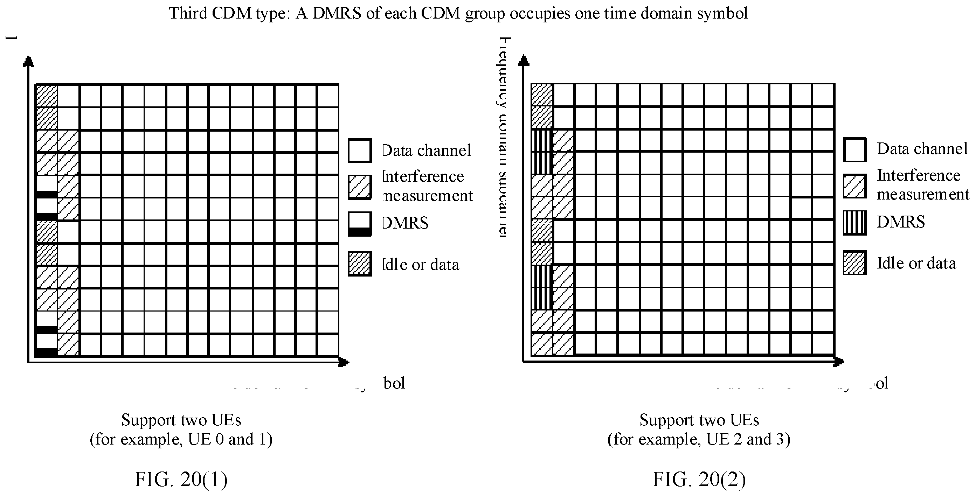

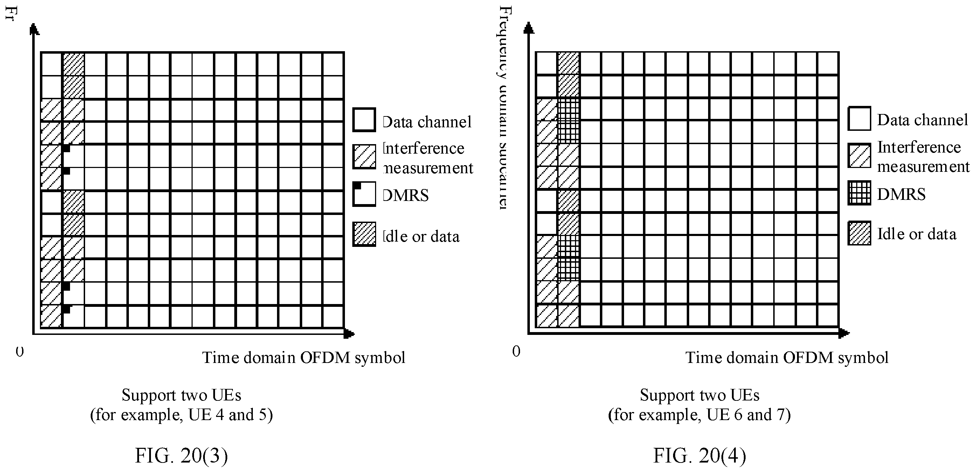

Referring to FIG. 20(1) to FIG. 20(4), each group resource in a group resource set in any time-frequency resource unit for sending the uplink signal includes two group resource units, and group resource units of DMRSs corresponding to all the CDM group IDs occupy four time domain symbols and four subcarriers; the quantity of CDM groups supported by the third CDM type is 4; and REs of each group resource unit are located in two consecutive subcarriers on two time domain symbols.

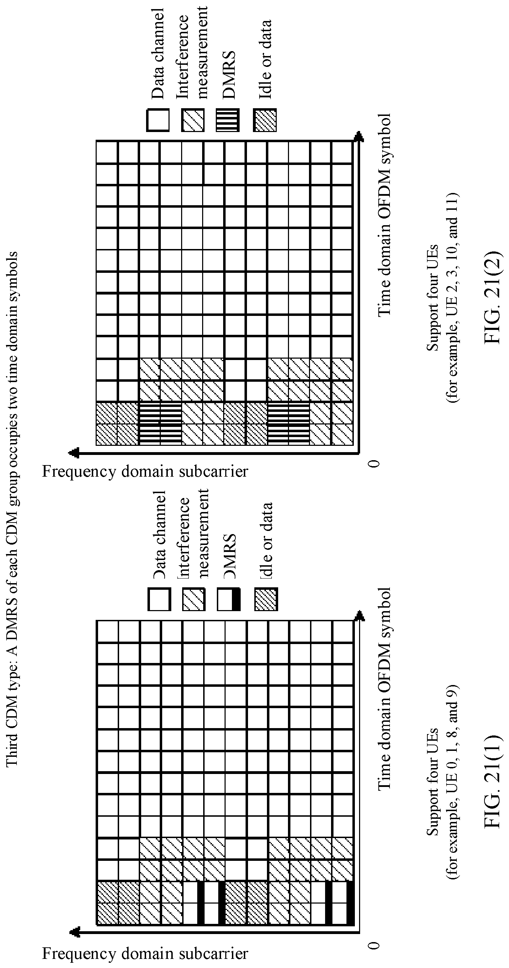

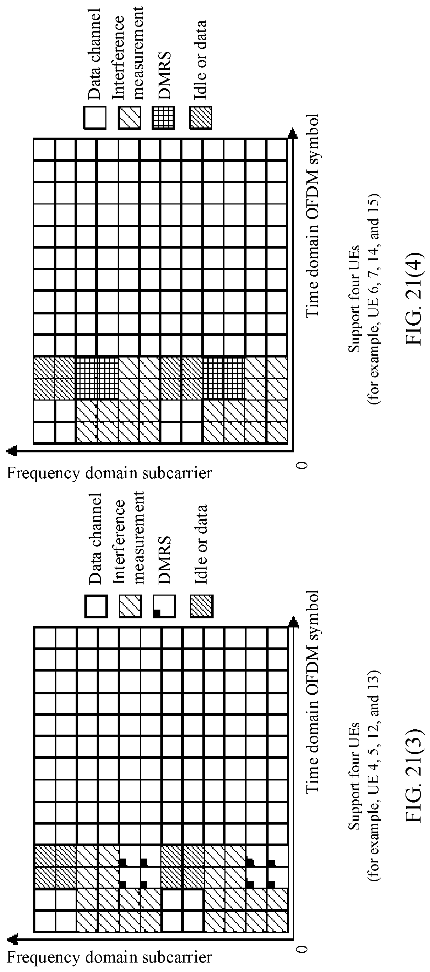

Referring to FIG. 21(1) to FIG. 21(4), each group resource in a group resource set in any time-frequency resource unit for sending the uplink signal includes two group resource units, and group resource units of DMRSs corresponding to all the CDM group IDs occupy two time domain symbols and four subcarriers; the quantity of CDM groups supported by the third CDM type is 4; and REs of each group resource unit are located in two consecutive subcarriers on two time domain symbols.

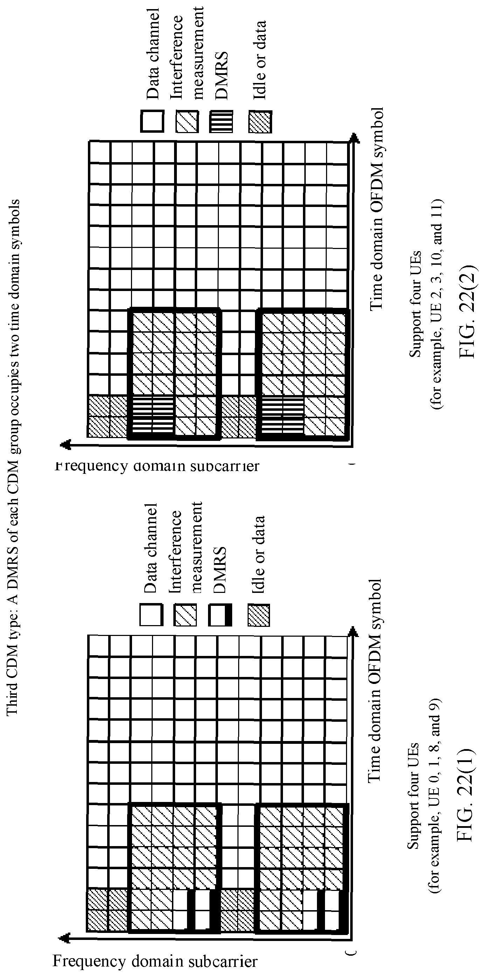

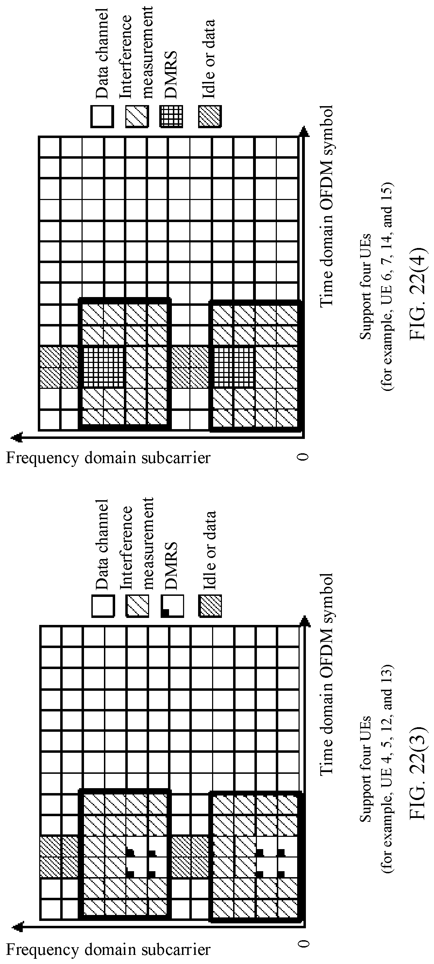

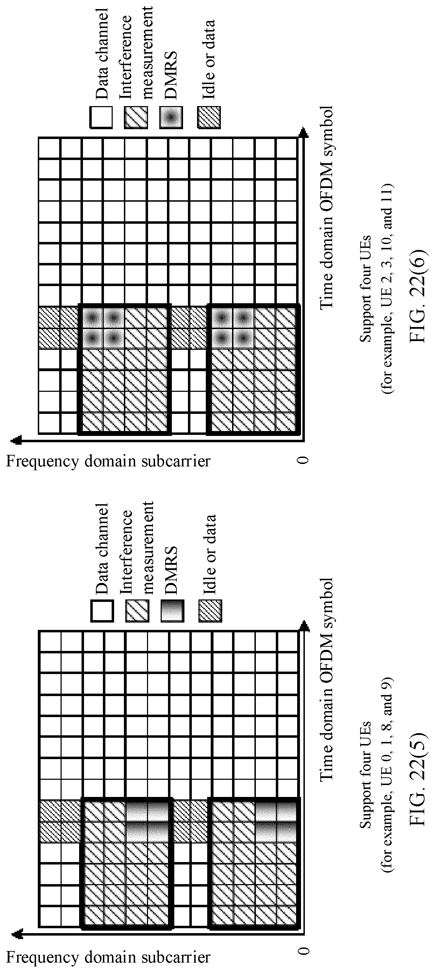

Referring to FIG. 22(1) to FIG. 22(6), each group resource in a group resource set in any time-frequency resource unit for sending the uplink signal includes two group resource units, and group resource units of DMRSs corresponding to all the CDM group IDs occupy six time domain symbols and four subcarriers; the quantity of CDM groups supported by the third CDM type is 6; and REs of each group resource unit are located in two consecutive subcarriers on two consecutive time domain symbols. Referring to FIG. 22(1), a set of time-frequency resources of DMRSs corresponding to all the CDM group IDs is a group resource set. A group resource set in one RB may include time-frequency resources shown in two black boxes, where a DMRS corresponding to each group ID is one group resource, each group resource includes two group resource units located in the two black boxes, and each group resource unit occupies four REs, that is, four REs in two continuous subcarriers in frequency domain and two continuous symbols in time domain. Two group resource units in group resources of a same group are located in a same time domain symbol, and subcarriers in which the two group resource units are located are separated by four subcarriers.

FIG. 12 to FIG. 15(3) are schematic diagrams of a group of patterns of zero power reference signals of different CDM groups in the first configuration mode. Table 2 shows differences between various patterns and selection of related configuration parameters.

Table 5 is a comparative description of various patterns of the zero power reference signal in the first configuration mode.

**Table 5**

| Drawing corresponding to a pattern | FIG. 12 | FIG. 13 | FIG. 14(1) to FIG. 14(3) | FIG. 15(1) to FIG. 15(3) |
|---|---|---|---|---|
| Whether the subcarrier of the DMRS is determined based on a group ID | Yes | Yes | Yes | Yes |
| CDM configuration type of the DMRS | Type 1 | Type 1 | Type 2 | Type 2 |
| Quantity of CDM groups supported by the CDM configuration type | 2 | 2 | 3 | 3 |
| Whether time-frequency resources of zero power reference signals of different groups are the same | No | No | No | No |

(continued)

| Drawing corresponding to a pattern | FIG. 12 | FIG. 13 | FIG. 14(1) to FIG. 14(3) | FIG. 15(1) to FIG. 15(3) |
|---|---|---|---|---|
| Whether the zero power reference signal and the DMRS are located in a same subcarrier | Yes | Yes | Yes | Yes |
| Whether the zero power reference signal is adjacent to the subcarrier in which the DMRS is located | No | No | No | No |
| | | | | |
| When the CDM configuration type is the type 1, whether the subcarrier in which the DMRS is located satisfies the following condition: a remainder of a subcarrier offset modulo the quantity of CDM groups supported by the CDM type is equal to the group ID | Yes | Yes | - | - |
| When the CDM configuration type is the type 2, whether the subcarrier in which the DMRS is located satisfies the following condition: a remainder of a subcarrier offset modulo the quantity of CDM groups supported by the CDM type is equal to the group ID*2 or the group ID*2+1 | - | - | Yes | Yes |
| Quantity of time domain symbols in which the DMRS is located | 1 | 2 | 1 | 2 |
| Quantity of time domain symbols in which the zero power reference signal is located | 1 | 2 | 1 | 2 |
| Whether the start time domain symbol in which the zero power reference signal is located is the first time domain symbol after the time domain symbol in which the DMRS is located | Yes | Yes | Yes | Yes |
| Whether the time-frequency resource of the zero power reference signal overlaps a data RE of another group | Yes | Yes | Yes | Yes |

FIG. 16 to FIG. 21(4) are schematic diagrams of a group of patterns of zero power reference signals of different CDM groups in the second configuration mode.

Table 6 is a comparative description of various patterns of the zero power reference signal in the second configuration mode.

**Table 6**

| Drawing corresponding to a pattern | FIG. 16 | FIG. 17 | FIG. 18 | FIG. 19 | FIG. 20(1) to FIG. 20(4) | FIG. 21(1) to FIG. 21(4) | FIG. 22(1) to FIG. 22(6) |
|---|---|---|---|---|---|---|---|
| Whether the subcarrier of the DMRS is determined based on a group ID | Yes | Yes | Yes | Yes | Yes | Yes | Yes |
| CDM type of the DMRS | Type 1 | Type 1 | Type 1 | Type 1 | Type 3 | Type 3 | Type 3 |
| Quantity of UEs that support multiplexing of the CDM group of the DMRS | | | | | | | |
| Zero power reference signals of different groups are the same | Same | Same | Same | Same | Some are different, and some are the same | Some are different, and some are the same | Some are different, and some are the same |

(continued)

| Drawing corresponding to a pattern | FIG. 16 | FIG. 17 | FIG. 18 | FIG. 19 | FIG. 20(1) to FIG. 20(4) | FIG. 21(1) to FIG. 21(4) | FIG. 22(1) to FIG. 22(6) |
|---|---|---|---|---|---|---|---|
| Whether the zero power reference signal overlaps a data RE of another group | No | No | No | No | No | No | No |
| Whether the zero power reference signal is located in all subcarriers in which DMRSs of all groups are located | Yes | Yes | Yes | Yes | Yes | Yes | Yes |
| | | | | | | | |
| Time domain symbol in which the zero power reference signal is located | First time domain symbol after the DMRS | First time domain symbol after the DMRS | First time domain symbol after the DMRS | First time domain symbol after the DMRS | Time domain symbol in which all DMRSs are located | Time domain symbol in which all DMRSs are located | Time domain symbol in which all DMRSs are located |
| Time domain symbol in which the DMRS is located | First | First and second | First | First and second | | | |
| Time domain symbol in which DMRSs of all groups are located | 1First | First and second | First | First and second | 2 | 4 | 6 |
| Quantity of group resource units in each group resource | 4 | 4 | 3 | 3 | 2 | 2 | 2 |
| Quantity of time domain symbols in which the DMRS is located in each group resource | 1 | 2 | 1 | 2 | 1 | 2 | 2 |
| Quantity of time domain symbols in which the zero power reference signal is located | 1 | 2 | 1 | 2 | Quantity of time domain symbols of the DMRS + 1 | Quantity of time domain symbols of the DMRS +2 | Quantity of time domain symbols of the DMRS + 4 |
| Quantity of time domain symbols in which DMRSs of all groups are located | 1 | 2 | 1 | 2 | 2 | 4 | 6 |

The technical solutions provided in the embodiments of this application have the following technical effects: In the embodiments of this application, the configuration of the zero power reference signal shown in FIG. 12 to FIG. 22(6) can ensure that time-frequency resources of zero power reference signals corresponding to users in a same CDM group are the same, so that data of a plurality of users in the group does not cause interference to the zero power reference signal. The user herein may be a terminal device, an antenna port, or a data stream. In other words, an RE of a zero power reference signal of the user corresponding to each group and a data RE of the user in the same group are located at different positions.

In the embodiments of this application, the configuration of the zero power reference signal shown in FIG. 16 to FIG. 22(6) can ensure that REs of the zero power reference signal are different from data REs of users corresponding to different CDM group IDs in the cell. In other words, the zero power reference signal does not include interference generated by data REs of users corresponding to any CDM group ID in the cell. Based on this, the network device can accurately measure interference of the neighboring cell based on the zero power reference signal. In other words, the neighboring cell interference is measured by using only the zero power reference signal.

Referring to FIG. 22(1) to FIG. 22(6), in the technical solution combining the second configuration mode of the zero power reference signal with the third CDM type of the DMRS, a quantity of CDM groups that can be supported by the DMRS is 6, and a quantity of UEs that can multiplex each CDM group is 4. In other words, the DMRS can be multiplexed by a maximum of 24 UEs, that is, parallel sending of up to 24 layers of data streams can be supported. This can significantly improve a system capacity of uplink transmission.

In the embodiments of this application, time-frequency resources in which zero power reference signals corresponding to different CDM groups are located may be different or partially the same. A zero power reference signal of one CDM group cannot occupy all subcarriers of one time domain symbol. It should be noted that DMRSs of one CDM group may occupy all subcarriers of one time domain symbol, but a reason is to avoid interruption of transmit power. Therefore, when the zero power reference signal is sent when the DMRS is sent, the zero power reference signals of all groups cannot fully occupy all subcarriers.

In the embodiments of this application, as shown in FIG. 22(1) to FIG. 22(6), when the DMRS uses the third CDM type and the zero power reference signal is configured in the second configuration mode, positions of REs in which DMRSs corresponding to each group ID are located may be any one of the six patterns shown in FIG. 22(1) to FIG. 22(6), and only time-frequency resources in which the DMRSs corresponding to each group ID are located need to remain different. For example, one group offset may be used to transform a position of an RE in which the DMRS corresponding to each group ID is located.

In the embodiments of this application, it should be noted that the uplink signal may alternatively not include the zero power reference signal. In this case, when the DMRS uses the third CDM type, a subcarrier set in which DMRSs corresponding to all the CDM groups are located may be all or a part of REs in the time-frequency resource unit for sending the uplink signal. In an example, a set of subcarriers in which DMRSs corresponding to all the CDM groups are located may be all subcarriers in one RB.

**Embodiment 5**

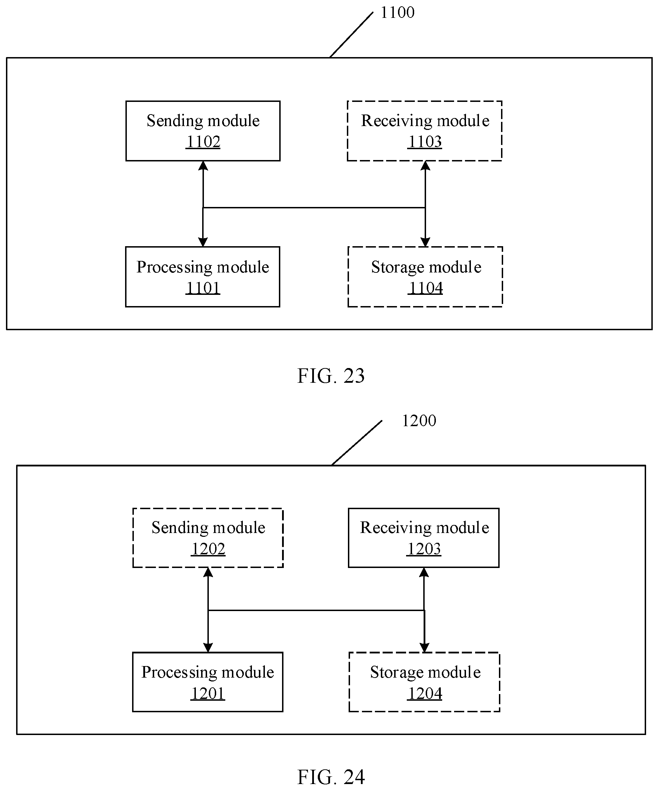

This embodiment of this application further provides a communications apparatus. FIG. 23 is a schematic diagram 1 of a structure of a communications apparatus according to an embodiment of this application. As shown in FIG. 23, the communications apparatus 1100 may include a processing module 1101 and a sending module 1102.

In a first optional implementation of the communications apparatus 1100,
the processing module 1101 may be configured to instruct the sending module 1102 to send, to a network device, an uplink signal that includes a zero power reference signal, where in a time-frequency resource for sending the uplink signal, transmit power of the uplink signal within a range of a time-frequency resource of the zero power reference signal is zero.

In this embodiment of this application, the communications apparatus may further include a receiving module 1103, where the receiving module 1103 is configured to receive configuration information of the zero power reference signal from the network device.

In this embodiment of this application, the processing module 1101 may be further configured to generate, based on the configuration information of the zero power reference signal, the uplink signal including the zero power reference signal.

In an optional implementation, the zero power reference signal is a zero power reference signal corresponding to a serving cell of the terminal device; and time-frequency resources of zero power reference signals corresponding to cells in a cell group including the serving cell and a neighboring cell of the serving cell do not overlap each other.

In an optional implementation, the configuration information of the zero power reference signal includes at least one of the following information:

a quantity of zero power reference signals in any time-frequency resource unit for sending the uplink signal;
a quantity of resource elements REs occupied by each zero power reference signal;
a start time domain symbol of a time domain symbol range allowed to be occupied by each zero power reference signal;
when each zero power reference signal occupies two REs, a distribution manner of a time domain symbol in which the two REs are located;
at least one subcarrier in which each zero power reference signal is located;
when each zero power reference signal occupies two REs, a subcarrier offset between a first subcarrier and a second subcarrier in which the two REs are located;
when the quantity of zero power reference signals is two, an indication about whether subcarriers in which the two zero power reference signals are located are the same; and
when the subcarriers in which the two zero power reference signals are located are different, a subcarrier offset between the subcarriers in which the two zero power reference signals are located.

In an optional implementation, when each zero power reference signal occupies one RE, a time domain symbol in which the RE is located is the start time domain symbol of the time domain symbol range allowed to be occupied by each zero power reference signal; or

when each zero power reference signal occupies two REs, a time domain symbol in which the two REs are located is at least one of two time domain symbols starting from the start time domain symbol, where
the uplink signal further includes a DMRS; and the start time domain symbol of one or more time domain symbols allowed to be occupied by each zero power reference signal is any one of the following: the first time domain symbol after a time domain symbol in which a time-frequency resource of the DMRS is located, a middle time domain symbol in the time-frequency resource unit, where the middle time domain symbol is different from a time domain symbol in which a time-frequency resource of the DMRS is located, or the second time domain symbol after the first time domain symbol in which a time-frequency resource of the DMRS is located.

In an optional implementation, the zero power reference signal of the serving cell of the terminal device occupies one RE, and the zero power reference signal of the neighboring cell of the serving cell of the terminal device occupies one RE; and
first subcarriers corresponding to the serving cell and the neighboring cell of the serving cell are different, and the first subcarriers are subcarriers in which the zero power reference signals are located.

In an optional implementation, a zero power reference signal corresponding to a target cell occupies two REs, and the target cell is either of the serving cell of the terminal device and the neighboring cell of the serving cell; a first subcarrier and a second subcarrier corresponding to the target cell are not adjacent to each other, and the first subcarrier and the second subcarrier are subcarriers in which the two REs corresponding to the target cell are located; and REs occupied by zero power reference signals corresponding to different target cells but located in a same time domain symbol are located in different subcarriers.

In an optional implementation, the time-frequency resource unit for sending the uplink signal includes 12 subcarriers; and a frequency domain offset FreqOffset of the first subcarrier corresponding to either of the serving cell and the neighboring cell of the serving cell as the target cell is determined based on a cell identity CID of the target cell, where

when $mod(CID, Q) < 6$, $FreqOffset = mod(CID, Q) \times 2$; or
when $mod(CID, Q) = 6$, $FreqOffset = 11$;
where mod represents a modulo operation, Q is a total quantity of cells of the serving cell and the neighboring cell of the serving cell, Q is an integer greater than or equal to 2 and less than 7, and CID is an integer greater than or equal to 0.

In an optional implementation, each zero power reference signal occupies two REs; and a distribution manner of a time domain symbol in which the two REs are located is a first distribution manner or a second distribution manner, where the first distribution manner is used to indicate that the two REs are located in two consecutive time domain symbols; and the second distribution manner is used to indicate that the two REs are located in one time domain symbol.

In an optional implementation, when the distribution manner of the time domain symbol in which the two REs are located is the second distribution manner, the time domain symbol in which the two REs are located is determined based on a cell identity of the serving cell of the terminal device, where

when $CID \times 2T < SumCR$, the time domain symbol in which the two REs are located is the start time domain symbol; or
when $SumCR \leq CID \times 2T < 2 \times SumCR$, the time domain symbol in which the two REs are located is the first time domain symbol after the start time domain symbol,
where CID is the cell identity, SumCR is a total quantity of subcarriers in one time-frequency resource unit, T is a quantity of subcarriers in separation, T is an integer greater than or equal to 1 or less than or equal to 6, and T is less than or equal to SumCR/Q.

In an optional implementation, when the distribution manner of the time domain symbol in which the two REs are located is the first distribution manner, a subcarrier offset between a first subcarrier and a second subcarrier in which the two REs are located is 1, 3, or 5; or
when the distribution manner of the time domain symbol in which the two REs are located is the second distribution manner, a subcarrier offset between a first subcarrier and a second subcarrier in which the two REs are located is 2, 4, or 6.

In an optional implementation, in one time-frequency resource unit for sending the uplink signal, there are two zero power reference signals; and time-frequency resources of the two zero power reference signals are located in a same subcarrier or different subcarriers.

In an optional implementation, when the two zero power reference signals are located in different subcarriers, a subcarrier offset between the subcarriers in which the two zero power reference signals are located is 1, 3, or 5.

In an optional implementation, the time-frequency resource of the zero power reference signal includes P REs located in a to-be-processed time domain symbol in one time-frequency resource unit for sending the uplink signal; the time-frequency resource unit includes 12 subcarriers in frequency domain; subcarriers in which the P REs are located are $\{i_1, i_2, ..., i_P\}$, and other subcarriers than the subcarriers in which the P REs are located among the 12 subcarriers are $\{j_1, j_2, ..., j_{12-P}\}$, where P is an integer greater than or equal to 1 and less than 12; and

the processing module is further configured to: obtain to-be-sent first data, where the first data is k-P data segments $x_1, x_2, ..., x_{k-P}$, and each RE is used to carry data in one data segment; determine second data based on the first data and a DFT matrix $W_{12 \times k}$, where the second data $x_{k-P+1}, ..., x_k$ satisfies:

$$\begin{bmatrix} x_{k-P+1} \\ \cdots \\ x_k \end{bmatrix} = \begin{bmatrix} w_{i_1,k-P+1} & \cdots & w_{i_1,k} \\ w_{i_2,k-P+1} & \cdots & w_{i_2,k} \\ \vdots & \vdots & \vdots \\ w_{i_P,k-P+1} & \cdots & w_{i_P,k} \end{bmatrix}^{-1} \begin{bmatrix} w_{j1,1} & \cdots & w_{j1,k-P} \\ \vdots & \vdots & \vdots \\ w_{jk-P,1} & \cdots & w_{jk-P,k-P} \end{bmatrix} \begin{bmatrix} x_1 \\ \vdots \\ x_{k-P} \end{bmatrix};$$

form time domain data $x$ by using the first data and the second data, where $x = (x_1, x_2, ..., x_k)^T$; perform a DFT on the time domain data $x$ based on the DFT matrix $W_{12 \times k}$, to obtain frequency domain data $y$, where $y = (y_1, y_2, y_3, ..., y_8, y_9, y_{10}, y_{11}, y_{12})^T$, and uplink signals $y_{i_1}, y_{i_2}, ..., y_{i_P}$ on the P REs are all 0; and use the frequency domain data $y$ as the uplink signal in the to-be-processed time domain symbol, where k is a quantity of time domain symbols in the time-frequency resource unit, and k is greater than p.

In a possible implementation, configuration information of the zero power reference signal includes at least one of the following information:

in any time-frequency resource unit for sending the uplink signal, a configuration indication about whether the zero power reference signal supports a code division multiplexing group CDM group, where the configuration indication about whether the zero power reference signal supports the CDM group is used to indicate whether to configure, based on a time-frequency resource in which a DMRS in the uplink signal is located or a CDM configuration type of the DMRS, the time-frequency resource in which the zero power reference signal is located;
the CDM configuration type of the DMRS, where the CDM configuration type of the DMRS includes a first CDM type, a second CDM type, and a third CDM type, the time-frequency resource of the DMRS is determined from a group resource set based on a CDM group ID corresponding to the DMRS, the group resource set includes a plurality of group resources, different CDM group IDs correspond to different group resources in the group resource set, and at least two of the plurality of group resources are located in different time domain symbols;
a configuration mode of the zero power reference signal supporting the CDM group, where the configuration mode includes a first configuration mode and a second configuration mode, an RE occupied by the zero power reference signal in the first configuration mode and an RE occupied by the DMRS are located in a same subcarrier, a subcarrier in which the zero power reference signal in the second configuration mode is located is a set of all subcarriers in which DMRSs of all CDM groups corresponding to a CDM configuration type are located, and the subcarriers in which the DMRSs of all the CDM groups are located are a part of subcarriers in the time-frequency resource unit for sending the uplink signal;

a start time domain symbol occupied by a zero power reference signal of each CDM group;
a quantity of time domain symbols occupied by the zero power reference signal of each CDM group; and
a quantity of group resource units in each group resource.

In a possible implementation, the subcarrier in which the zero power reference signal is located is a part of subcarriers in the time-frequency resource unit for sending the uplink signal.

In a possible implementation, the uplink signal further includes a DMRS; and a subcarrier in which the DMRS is located is determined based on a CDM group corresponding to the DMRS, where

DMRSs of different CDM groups are located in different time domain symbols and/or subcarriers; and
the time-frequency resource in which the zero power reference signal is located is determined based on a time-frequency resource of the DMRS or a CDM configuration type.

In a possible implementation, a configuration mode of the zero power reference signal supporting the CDM group is a first configuration mode; a CDM configuration type of the DMRS is a first CDM type or a second CDM type, where DMRSs corresponding to different group IDs are located in different subcarriers; and an identifier of a subcarrier in which the zero power reference signal is located is the same as an identifier of the subcarrier in which the DMRS of the uplink signal is located.

In a possible implementation, a configuration mode of the zero power reference signal supporting the CDM group is a second configuration mode; a CDM configuration type of the DMRS is a first CDM type or a second CDM type, where DMRSs corresponding to different group IDs are located in different subcarriers; a subcarrier in which the zero power reference signal is located includes a subcarrier in which DMRSs of all CDM groups corresponding to the CDM configuration type are located; and a start time domain symbol in which an RE occupied by the zero power reference signal is located is the first time domain symbol after a time domain symbol in which the DMRS is located.

In a possible implementation, a configuration mode of the zero power reference signal supporting the CDM group is a second configuration mode; a CDM configuration type of the DMRS is a third CDM type; and the time-frequency resource in which the zero power reference signal is located includes a set of time-frequency resources in which DMRSs of all CDM groups corresponding to the CDM configuration type are located except the time-frequency resource in which the DMRS of the uplink signal is located, the time-frequency resource of the DMRS is determined from a group resource set based on a CDM group ID corresponding to the DMRS, the group resource set includes a plurality of group resources, different CDM group IDs correspond to different group resources in the group resource set, at least two of the plurality of group resources are located in different time domain symbols, and all subcarriers in which the DMRSs of all the CDM groups are located are a part of subcarriers in the time-frequency resource unit for sending the uplink signal. DMRSs corresponding to at least two CDM groups supported by the third CDM type are located in different time domain symbols.

In a possible implementation, the CDM configuration type of the DMRS is a first CDM type or a second CDM type; and when the CDM configuration type of the DMRS is the first CDM type, a subcarrier in which the zero power reference signal is located includes all subcarriers that satisfy a first condition, where the first condition is that remainders of subcarrier offsets of all subcarriers modulo 2 are equal to the CDM group ID; or when the CDM configuration type of the DMRS is the second CDM type, a subcarrier in which the zero power reference signal is located includes all subcarriers that satisfy a second condition, where the second condition is that remainders of subcarrier offsets of all subcarriers modulo 6 are equal to the CDM group ID*2 or the CDM group ID*2+1.

In a possible implementation, each group resource includes at least two group resource units; the at least two group resource units occupy a same time domain symbol, and occupy different subcarriers; and each group resource unit occupies at least one time domain symbol and at least one subcarrier, where all subcarriers in which group resource units corresponding to all the CDM groups are located are a part of subcarriers in the time-frequency resource unit.

In a possible implementation, the time-frequency resource unit for sending the uplink signal that includes the DMRS is a resource block RB, and any RB includes two, three, or four group resource units; each group resource unit occupies two consecutive time domain symbols; each group resource unit occupies two consecutive subcarriers; a quantity of time domain symbols occupied by group resource units of all CDM group IDs is 6; and a quantity of subcarriers occupied by the group resource units of all the CDM group IDs is 4.

In a possible implementation, in the time-frequency resource unit for sending the uplink signal, a difference between transmit power of different time domain symbols is less than a preset power difference threshold.

In a possible implementation, in the time-frequency resource for sending the uplink signal, transmit power of different time domain symbols is equal.

In a possible implementation, the time-frequency resource unit for sending the uplink signal is a resource block RB; and in any target time domain symbol including the RE occupied by the zero power reference signal, transmit power of each valid RE is transmit power of the target time domain symbol divided by a quantity of valid REs, where the valid RE is an RE other than the RE occupied by the zero power reference signal in the target time domain symbol.

In a possible implementation, the RE other than the RE occupied by the zero power reference signal in the target time domain symbol in which the zero power reference signal is located is a data RE used to carry data.

In a second optional implementation of the communications apparatus 1100,

the processing module 1101 may be configured to instruct the sending module 1102 to send a DMRS to a network device, where

a time-frequency resource of the DMRS is determined from a group resource set based on a first identifier corresponding to the terminal device, the group resource set includes a plurality of group resources, different first identifiers correspond to different group resources in the group resource set, and at least two of the plurality of group resources are located in different time domain symbols.

DMRSs corresponding to different first identifiers are located in different time domain symbols and/or subcarriers.

The DMRS may be used by the network device to perform channel estimation on an uplink signal including the DMRS, cancel interference, demodulate data carried in the uplink signal, and the like.

In a possible implementation, the first identifier is an identifier of a CDM group corresponding to the terminal device.

In a possible implementation, each group resource includes at least two group resource units; the at least two group resource units occupy a same time domain symbol, and occupy different subcarriers; and each group resource unit occupies at least one time domain symbol and at least one subcarrier.

In a possible implementation, the time-frequency resource unit for sending the uplink signal that includes the DMRS is a resource block RB, and any RB includes two, three, or four group resource units; each group resource unit occupies two consecutive time domain symbols; each group resource unit occupies two consecutive subcarriers; a quantity of time domain symbols occupied by group resource units of all CDM group IDs is 6; and a quantity of subcarriers occupied by the group resource units of all the CDM group IDs is 4.

FIG. 24 is a schematic diagram 2 of a structure of a communications apparatus according to an embodiment of this application. As shown in FIG. 24, the communications apparatus 1200 includes a processing module 1201 and a receiving module 1203.

In a first optional implementation of the communications apparatus 1200,

the receiving module 1203 is configured to receive an uplink signal that is sent by a terminal device and that includes a zero power reference signal, where in a time-frequency resource for sending the uplink signal, transmit power of the uplink signal within a range of a time-frequency resource of the zero power reference signal is zero; and
the processing module 1201 is configured to perform channel estimation based on the uplink signal received in the time-frequency resource of the zero power reference signal; and demodulate the received uplink signal based on a result of the channel estimation.

In this embodiment of this application, the apparatus 1200 may further include a sending module 1202, configured to send configuration information of the zero power reference signal to the terminal device. In this embodiment of this application, the apparatus 1200 may further include a storage module 1204, configured to store related data and instructions.

In an optional implementation, the zero power reference signal is a zero power reference signal corresponding to a serving cell of the terminal device; and time-frequency resources of zero power reference signals corresponding to cells in a cell group including the serving cell and a neighboring cell of the serving cell do not overlap each other.

In an optional implementation, the configuration information of the zero power reference signal includes at least one of the following information:

a quantity of zero power reference signals in any time-frequency resource unit for sending the uplink signal;
a quantity of resource elements REs occupied by each zero power reference signal;
a start time domain symbol of a time domain symbol range allowed to be occupied by each zero power reference signal;
when each zero power reference signal occupies two REs, a distribution manner of a time domain symbol in which the two REs are located;
at least one subcarrier in which each zero power reference signal is located;
when each zero power reference signal occupies two REs, a subcarrier offset between a first subcarrier and a second subcarrier in which the two REs are located;
when the quantity of zero power reference signals is two, an indication about whether subcarriers in which the two zero power reference signals are located are the same; and
when the subcarriers in which the two zero power reference signals are located are different, a subcarrier offset between the subcarriers in which the two zero power reference signals are located.

In an optional implementation, when each zero power reference signal occupies one RE, a time domain symbol in which the RE is located is the start time domain symbol of the time domain symbol range allowed to be occupied by each zero power reference signal; or

when each zero power reference signal occupies two REs, a time domain symbol in which the two REs are located is at least one of two time domain symbols starting from the start time domain symbol, where
the uplink signal further includes a DMRS; and the start time domain symbol of one or more time domain symbols allowed to be occupied by each zero power reference signal is any one of the following: the first time domain symbol after a time domain symbol in which a time-frequency resource of the DMRS is located, a middle time domain symbol in the time-frequency resource unit, where the middle time domain symbol is different from a time domain symbol in which a time-frequency resource of the DMRS is located, or the second time domain symbol after the first time domain symbol in which a time-frequency resource of the DMRS is located.

In a possible implementation, the zero power reference signal of the serving cell of the terminal device occupies one RE, and the zero power reference signal of the neighboring cell of the serving cell of the terminal device occupies one RE; and first subcarriers corresponding to the serving cell and the neighboring cell of the serving cell are different, and the first subcarriers are subcarriers in which the zero power reference signals are located.

In an optional implementation, a zero power reference signal corresponding to a target cell occupies two REs, and the target cell is either of the serving cell of the terminal device and the neighboring cell of the serving cell; a first subcarrier and a second subcarrier corresponding to the target cell are not adjacent to each other, and the first subcarrier and the second subcarrier are subcarriers in which the two REs corresponding to the target cell are located; and REs occupied by zero power reference signals corresponding to different target cells but located in a same time domain symbol are located in different subcarriers.

In an optional implementation, the time-frequency resource unit for sending the uplink signal includes 12 subcarriers; and a frequency domain offset FreqOffset of the first subcarrier corresponding to either of the serving cell and the neighboring cell of the serving cell as the target cell is determined based on a cell identity CID of the target cell, where

when $mod(CID, Q) < 6$, $FreqOffset = mod(CID, Q) \times 2$; or
when $mod(CID, Q) = 6$, $FreqOffset = 11$;
where mod represents a modulo operation, Q is a total quantity of cells of the serving cell and the neighboring cell of the serving cell, Q is an integer greater than or equal to 2 and less than 7, and CID is an integer greater than or equal to 0.

In an optional implementation, each zero power reference signal occupies two REs; and a distribution manner of a time domain symbol in which the two REs are located is a first distribution manner or a second distribution manner, where the first distribution manner is used to indicate that the two REs are located in two consecutive time domain symbols; and the second distribution manner is used to indicate that the two REs are located in one time domain symbol.

In an optional implementation, when the distribution manner of the time domain symbol in which the two REs are located is the second distribution manner, the time domain symbol in which the two REs are located is determined based on a cell identity of the serving cell of the terminal device, where

when $CID \times 2T < SumCR$, the time domain symbol in which the two REs are located is the start time domain symbol; or
when $SumCR \le CID \times 2T < 2 \times SumCR$, the time domain symbol in which the two REs are located is the first time domain symbol after the start time domain symbol,
where CID is the cell identity, SumCR is a total quantity of subcarriers in one time-frequency resource unit, T is a quantity of subcarriers in separation, T is an integer greater than or equal to 1 or less than or equal to 6, and T is less than or equal to SumCR/Q.

In a possible implementation, when the distribution manner of the time domain symbol in which the two REs are located is the first distribution manner, a subcarrier offset between a first subcarrier and a second subcarrier in which the two REs are located is 1, 3, or 5; or when the distribution manner of the time domain symbol in which the two REs are located is the second distribution manner, a subcarrier offset between a first subcarrier and a second subcarrier in which the two REs are located is 2, 4, or 6.

In an optional implementation, in one time-frequency resource unit for sending the uplink signal, there are two zero power reference signals; and time-frequency resources of the two zero power reference signals are located in a same subcarrier or different subcarriers.

In an optional implementation, when the two zero power reference signals are located in different subcarriers, a subcarrier offset between the subcarriers in which the two zero power reference signals are located is 1, 3, or 5.

In a possible implementation, configuration information of the zero power reference signal includes at least one of the following information:

in any time-frequency resource unit for sending the uplink signal, a configuration indication about whether the zero power reference signal supports a code division multiplexing group CDM group, where the configuration indication about whether the zero power reference signal supports the CDM group is used to indicate whether to configure, based on a time-frequency resource in which a DMRS in the uplink signal is located or a CDM configuration type of the DMRS, the time-frequency resource in which the zero power reference signal is located;
the CDM configuration type of the DMRS, where the CDM configuration type of the DMRS includes a first CDM type, a second CDM type, and a third CDM type, the time-frequency resource of the DMRS is determined from a group resource set based on a CDM group ID corresponding to the DMRS, the group resource set includes a plurality of group resources, different CDM group IDs correspond to different group resources in the group resource set, and at least two of the plurality of group resources are located in different time domain symbols;

a configuration mode of the zero power reference signal supporting the CDM group, where the configuration mode includes a first configuration mode and a second configuration mode, an RE occupied by the zero power reference signal in the first configuration mode and an RE occupied by the DMRS are located in a same subcarrier, a subcarrier in which the zero power reference signal in the second configuration mode is located is a set of all subcarriers in which DMRSs of all CDM groups corresponding to a CDM configuration type are located, and the subcarriers in which the DMRSs of all the CDM groups are located are a part of subcarriers in the time-frequency resource unit for sending the uplink signal;

a start time domain symbol occupied by a zero power reference signal of each CDM group;

a quantity of time domain symbols occupied by the zero power reference signal of each CDM group; and

a quantity of group resource units in each group resource.

In a possible implementation, the subcarrier in which the zero power reference signal is located is a part of subcarriers in the time-frequency resource unit for sending the uplink signal.

In a possible implementation, the uplink signal further includes a DMRS; and a subcarrier in which the DMRS is located is determined based on a CDM group corresponding to the DMRS, where

DMRSs of different CDM groups are located in different time domain symbols and/or subcarriers; and

the time-frequency resource in which the zero power reference signal is located is determined based on a time-frequency resource of the DMRS or a CDM configuration type.

In a possible implementation, a configuration mode of the zero power reference signal supporting the CDM group is a first configuration mode; a CDM configuration type of the DMRS is a first CDM type or a second CDM type, where DMRSs corresponding to different group IDs are located in different subcarriers; and an identifier of a subcarrier in which the zero power reference signal is located is the same as an identifier of the subcarrier in which the DMRS of the uplink signal is located.

In a possible implementation, a configuration mode of the zero power reference signal supporting the CDM group is a second configuration mode; a CDM configuration type of the DMRS is a first CDM type or a second CDM type, where DMRSs corresponding to different group IDs are located in different subcarriers; a subcarrier in which the zero power reference signal is located includes a subcarrier in which DMRSs of all CDM groups corresponding to the CDM configuration type are located; and a start time domain symbol in which an RE occupied by the zero power reference signal is located is the first time domain symbol after a time domain symbol in which the DMRS is located.

In a possible implementation, a configuration mode of the zero power reference signal supporting the CDM group is a second configuration mode; a CDM configuration type of the DMRS is a third CDM type; and the time-frequency resource in which the zero power reference signal is located includes a set of time-frequency resources in which DMRSs of all CDM groups corresponding to the CDM configuration type are located except the time-frequency resource in which the DMRS of the uplink signal is located, the time-frequency resource of the DMRS is determined from a group resource set based on a CDM group ID corresponding to the DMRS, the group resource set includes a plurality of group resources, different CDM group IDs correspond to different group resources in the group resource set, at least two of the plurality of group resources are located in different time domain symbols, and all subcarriers in which the DMRSs of all the CDM groups are located are a part of subcarriers in the time-frequency resource unit for sending the uplink signal. DMRSs corresponding to at least two CDM groups supported by the third CDM type are located in different time domain symbols.

In a possible implementation, the CDM configuration type of the DMRS is a first CDM type or a second CDM type; and when the CDM configuration type of the DMRS is the first CDM type, a subcarrier in which the zero power reference signal is located includes all subcarriers that satisfy a first condition, where the first condition is that remainders of subcarrier offsets of all subcarriers modulo 2 are equal to the CDM group ID; or when the CDM configuration type of the DMRS is the second CDM type, a subcarrier in which the zero power reference signal is located includes all subcarriers that satisfy a second condition, where the second condition is that remainders of subcarrier offsets of all subcarriers modulo 6 are equal to the CDM group ID*2 or the CDM group ID*2+1.

In a possible implementation, each group resource includes at least two group resource units; the at least two group resource units occupy a same time domain symbol, and occupy different subcarriers; and each group resource unit occupies at least one time domain symbol and at least one subcarrier.

In a possible implementation, the time-frequency resource unit for sending the uplink signal that includes the DMRS is a resource block RB, and any RB includes two, three, or four group resource units; each group resource unit occupies two consecutive time domain symbols; each group resource unit occupies two consecutive subcarriers; a quantity of time domain symbols occupied by group resource units of all CDM group IDs is 6; and a quantity of subcarriers occupied by the group resource units of all the CDM group IDs is 4.

In a second optional implementation of the communications apparatus 1200, the receiving module 1203 may be configured to receive a DMRS sent by a terminal device, where a time-frequency resource of the DMRS is determined from a group resource set based on a first identifier corresponding to the terminal device, the group resource set includes a plurality of group resources, different first identifiers correspond to different group resources in the group resource set, and at least two of the plurality of group resources are located in different time domain symbols.

The processing module 1201 may be configured to demodulate, based on the DMRS, a received uplink signal including the DMRS.

In a possible implementation, the first identifier is an identifier of a CDM group corresponding to the terminal device.

In a possible implementation, a time domain symbol and/or a subcarrier in which the DMRS is located are/is determined based on an identifier of a CDM group corresponding to the terminal device and a CDM configuration type; and when the CDM configuration type is a third CDM type, a time domain symbol in which a DMRS corresponding to a first CDM group is located is different from a time domain symbol in which a DMRS corresponding to a second CDM group is located, where the first CDM group is the CDM group corresponding to the terminal device, and the second CDM group is at least one other CDM group of at least two CDM groups that include the first CDM group and that are supported by the third CDM type.

In a possible implementation, each group resource includes at least two group resource units; the at least two group resource units occupy a same time domain symbol, and occupy different subcarriers; and each group resource unit occupies at least one time domain symbol and at least one subcarrier.

In a possible implementation, the time-frequency resource unit for sending the uplink signal that includes the DMRS is a resource block RB, and any RB includes two, three, or four group resource units; each group resource unit occupies two consecutive time domain symbols; each group resource unit occupies two consecutive subcarriers; a quantity of time domain symbols occupied by group resource units of all CDM group IDs is 6; and a quantity of subcarriers occupied by the group resource units of all the CDM group IDs is 4.

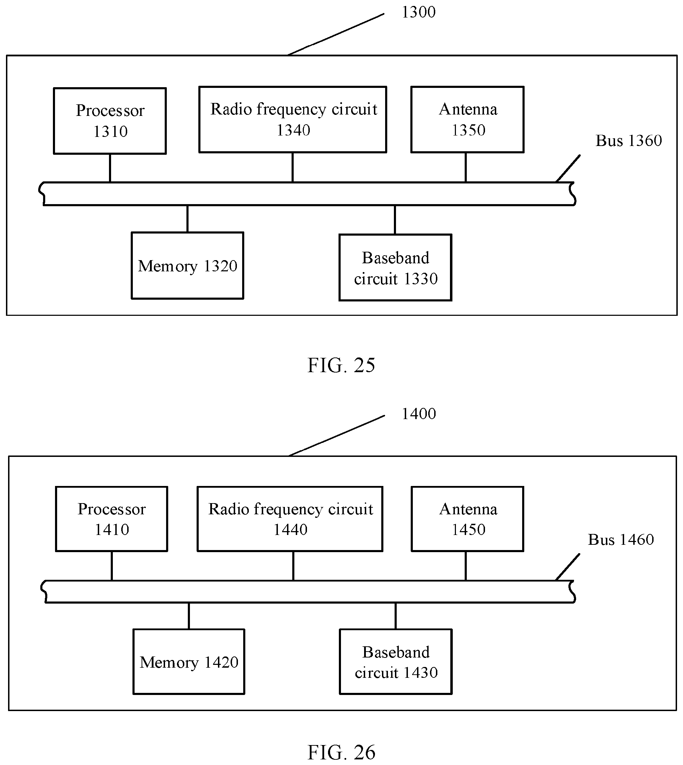

FIG. 25 is a schematic diagram 1 of a structure of a terminal device according to an embodiment of this application. As shown in FIG. 25, the terminal device in this embodiment of this application may be the terminal device in the foregoing method embodiment, and the apparatus 1300 may be configured to perform some or all functions of the terminal device in the foregoing method embodiment. The apparatus 1300 may include a processor 1310, a baseband circuit 1330, a radio frequency circuit 1340, and an antenna 1350. Optionally, the apparatus 1300 may further include a memory 1320. The components of the apparatus 1300 are coupled together by using a bus 1360. In addition to a data bus, the bus 1360 further includes a power bus, a control bus, and a status signal bus. However, for clear description, various types of buses in the figure are marked as the bus 1360.

The processor 1310 may be configured to control the terminal device, perform processing performed by the terminal device in the foregoing embodiment, perform processing related to the terminal device in the foregoing method embodiment and/or another process used for the technology described in this application, and further run an operating system, manage a bus, and execute programs or instructions stored in the memory.

The baseband circuit 1330, the radio frequency circuit 1340, and the antenna 1350 may be configured to support the terminal device in performing wireless communication with the network device in the foregoing embodiment.

In an example, the antenna 1350 receives a to-be-sent frame sent by the network device and encapsulated by a PHY layer, the radio frequency circuit 1340 performs processing such as filtering, amplification, downconversion, and digitization, then the baseband circuit 1330 performs baseband processing such as decoding and data decapsulation according to a protocol, and the processor 1310 performs processing to restore service data and signaling information sent by the network device. In still another example, the processor 1310 may process cell access control information sent by the terminal device, the baseband circuit 1330 performs baseband processing such as protocol encapsulation and encoding, and further the radio frequency circuit 1340 performs radio frequency processing such as analog conversion, filtering, amplification, and up-conversion, and then the cell access control information is sent to the network device by using the antenna 1350.

The memory 1320 may be configured to store program code and data of the terminal device. The memory 1320 may be the storage module in FIG. 23. It may be understood that the baseband circuit 1330, the radio frequency circuit 1340, and the antenna 1350 may be further configured to support communication between the terminal device and another network entity, for example, configured to support the terminal device in communicating with a network element on a core network side. The memory 1320 in FIG. 25 is shown as separate from the processor 1310. However, a person skilled in the art readily appreciates that the memory 1320 or any part thereof may be located outside the apparatus 1300. For example, the memory 1320 may include a transmission line and/or a computer artifact separated from a wireless node, both of which may be accessed by the processor 1310 through the bus 1360. Alternatively, the memory 1320 or any part thereof may be integrated into the processor 1310, for example, may be a cache and/or a general purpose register.

It may be understood that FIG. 13 shows only a simplified design of the terminal device. For example, in an actual application, the terminal device may include any quantity of transmitters, receivers, processors, memories, and the like, and all terminal devices that can implement the present invention shall fall within the protection scope of the present invention.

It should be noted that, when used as a receive end, the apparatus 1300 may be further configured to perform some or all functions of the terminal device in the foregoing method embodiment.

FIG. 26 is a schematic diagram 2 of a structure of a network device according to an embodiment of this application. As shown in FIG. 26, the network device 1400 in this embodiment of this application may be the network device in the foregoing method embodiment. The apparatus 1400 may be configured to perform some or all functions of the network device in the foregoing method embodiment. The apparatus 1400 may include a processor 1410, a baseband circuit 1430, a radio frequency circuit 1440, and an antenna 1450. Optionally, the apparatus 1400 may further include a memory 1420. The components of the apparatus 1400 are coupled together by using a bus 1460. In addition to a data bus, the bus 1460 further includes a power bus, a control bus, and a status signal bus. However, for clear description, various types of buses in the figure are marked as the bus 1460.

The processor 1410 may be configured to control the network device, perform processing performed by the network device in the foregoing embodiment, perform processing related to the network device in the foregoing method embodiment and/or another process used for the technology described in this application, and further run an operating system, manage a bus, and execute programs or instructions stored in the memory.

The baseband circuit 1430, the radio frequency circuit 1440, and the antenna 1450 may be configured to support the network device in performing wireless communication with the terminal device in the foregoing embodiment.

In an example, the antenna 1450 receives a to-be-sent frame sent by the terminal device and encapsulated by a PHY layer, the radio frequency circuit 1440 performs processing such as filtering, amplification, downconversion, and digitization, then the baseband circuit 1430 performs baseband processing such as decoding and data decapsulation according to a protocol, and the processor 1410 performs processing to restore service data and signaling information sent by the network device. In still another example, the processor 1410 may process configuration information sent by the network device, the baseband circuit 1430 performs baseband processing such as protocol encapsulation and encoding, and further the radio frequency circuit 1440 performs radio frequency processing such as analog conversion, filtering, amplification, and up-conversion, and then the configuration information is sent to the terminal device by using the antenna 1450.

The memory 1420 may be configured to store program code and data of the network device. The memory 1420 may be the storage module in FIG. 24. It may be understood that the baseband circuit 1430, the radio frequency circuit 1440, and the antenna 1450 may be further configured to support communication between the network device and another network entity, for example, configured to support the network device in communicating with a network element on a core network side. The memory 1420 in FIG. 26 is shown as separate from the processor 1410. However, a person skilled in the art readily appreciates that the memory 1420 or any part thereof may be located outside the apparatus 1400. For example, the memory 1420 may include a transmission line and/or a computer artifact separated from a wireless node, both of which may be accessed by the processor 1410 through the bus 1460. Alternatively, the memory 1420 or any part thereof may be integrated into the processor 1410, for example, may be a cache and/or a general purpose register.

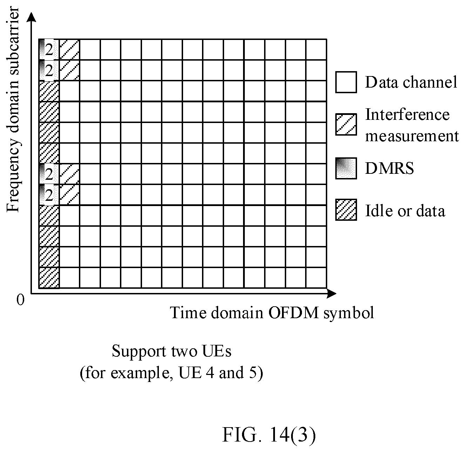

It may be understood that FIG. 14 shows only a simplified design of the network device. For example, in an actual application, the network device may include any quantity of transmitters, receivers, processors, memories, and the like, and all network devices that can implement the present invention shall fall within the protection scope of the present invention.

It should be noted that, when used as a receive end, the apparatus 1400 may be further configured to perform some or all functions of the network device in the foregoing method embodiment.

An embodiment of this application further provides a system on chip, including a processor, where the processor is coupled to a memory, the memory is configured to store a program or instructions, and when the program or the instructions are executed by the processor, the system on chip is enabled to implement the method in any one of the foregoing method embodiments.

Optionally, there may be one or more processors in the system on chip. The processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the system on chip. The memory may be integrated with the processor, or the memory and the processor are separately disposed. This is not limited in this application. For example, the memory may be a non-transitory memory, for example, a read-only memory ROM. The memory and the processor may be integrated into a same chip, or may be separately disposed on different chips. A type of the memory and a manner of disposing the memory and the processor are not specifically limited in this application.

For example, the system on chip may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by hardware integrated logic circuits in the processor or instructions in a form of software. The steps of the methods disclosed with reference to embodiments of this application may be directly performed by a hardware processor, or may be performed by a combination of hardware and software modules in the processor.

An embodiment of this application further provides a computer-readable storage medium. The computer storage medium stores computer-readable instructions, and when a computer reads and executes the computer-readable instructions, the computer is enabled to perform the method in any one of the foregoing method embodiments.

An embodiment of this application further provides a computer program product. When a computer reads and executes the computer program product, the computer is enabled to perform the method in any one of the foregoing method embodiments.

An embodiment of this application further provides a communications system. The communications system includes a network device and a terminal device. The network device and the terminal device may perform any one of the foregoing methods.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or transistor logic device, or a discrete hardware component, the memory (a storage module) is integrated into the processor.

It should be understood that, in absence of conflict, each embodiment described in this application and/or the technical feature in each embodiment may be combined.

For details and technical effects of other technical solutions in the embodiments of this application, refer to the descriptions in other embodiments of this application.

All or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, all or some of the procedures or functions in this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or may be a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive), or the like.

## EP 4 184 816 B1

**Claims**

1. An uplink transmission method performed by a terminal device, the method comprising the steps of:

    • sending (S 101), to a network device, an uplink signal that comprises a zero power reference signal and a demodulation reference signal, DMRS,

        ◦ wherein in a time-frequency resource for sending the uplink signal, transmit power of the uplink signal within a range of a time-frequency resource of the zero power reference signal is zero,
        ◦ wherein the zero power reference signal occupies two resource elements, REs, and the two REs are located in at least one time domain symbol among two time domain symbols, the at least one time domain symbol starting from a start time domain symbol, wherein the start time domain symbol is any one of the following:

            ◦ the first time domain symbol after a time domain symbol in which a time-frequency resource of the DMRS is located;
            ▪ a middle time domain symbol in a time-frequency resource unit, wherein the middle time domain symbol is different from the time domain symbol in which the time-frequency resource of the DMRS is located; or
            ▪ the second time domain symbol after the first time domain symbol in which the time-frequency resource of the DMRS is located,

    • **characterized in that**, before the sending of the uplink signal to the network device, the method comprises the step of determining the at least one time domain symbol in which the two REs are located based on a cell identity of the serving cell of the terminal device, wherein:

        ▪ when $CID \times 2T <$ SumCR, a time domain symbol in which the two REs are located is the start time domain symbol;
        ▪ when SumCR $\leq CID \times 2T < 2 \times$ SumCR , a time domain symbol in which the two REs are located is the first time domain symbol after the start time domain symbol, wherein CID is the cell identity, SumCR is a total quantity of subcarriers in one time-frequency resource unit, T is a quantity of subcarriers in separation between the two REs, and T is an integer greater than or equal to 1 or less than or equal to 6, and
        ▪ when $CID \times 2T \geq 2 \times$ SumCR, the at least one time domain symbol in which the two REs are located are two time domain symbols, and the two time domain symbols are two consecutive time domain symbols in the time-frequency resource unit.

2. The method according to claim 1, wherein configuration information of the zero power reference signal comprises at least one of the following information:

    ◦ a quantity of zero power reference signals in any time-frequency resource unit for sending the uplink signal;
    ◦ a quantity of resource elements, REs, occupied by each zero power reference signal;
    ◦ the start time domain symbol;
    ◦ a distribution manner of the two REs in the time domain symbol;
    ◦ at least one subcarrier in which each zero power reference signal is located;
    ◦ a subcarrier offset between a first subcarrier and a second subcarrier in which the two REs are located; and
    ◦ when the quantity of zero power reference signals is two, an indication about whether subcarriers in which the two zero power reference signals are located are the same, and when the subcarriers in which the two zero power reference signals are located are different, a subcarrier offset between the subcarriers in which the two zero power reference signals are located.

3. The method according to claim 1 or 2, wherein a zero power reference signal corresponding to a target cell occupies two REs, and the target cell is either the serving cell of the terminal device and a neighboring cell of the serving cell;

    a first subcarrier and a second subcarrier corresponding to the target cell are not adjacent to each other, and the first subcarrier and the second subcarrier are subcarriers in which the two REs corresponding to the target cell are located; and
    REs occupied by zero power reference signals corresponding to different target cells but located in a same time domain symbol are located in different subcarriers.

4. The method according to any of the preceding claims, wherein the time-frequency resource unit for sending the uplink signal comprises 12 subcarriers, and a frequency domain offset, FreqOffset, of the first subcarrier corresponding to either of the serving cell and the neighboring cell of the serving cell as the target cell is determined based on a cell identity CID of the target cell, wherein

when $mod(CID, Q) < 6$, $FreqOffset = mod(CID, Q) \times 2$; or
when $mod(CID, Q) = 6$, $FreqOffset = 11$,

wherein mod represents a modulo operation, Q is a total quantity of cells of the serving cell and the neighboring cell of the serving cell, Q is an integer greater than or equal to 2 and less than 7, and CID is an integer greater than or equal to 0.

5. The method according to any of the preceding claims, wherein configuration information of the zero power reference signal comprises at least one of the following information:

◦ in any time-frequency resource unit for sending the uplink signal, a configuration indication about whether the zero power reference signal supports a code division multiplexing group, CDM group, wherein the configuration indication about whether the zero power reference signal supports the CDM group is used to indicate whether to configure, based on a time-frequency resource in which the DMRS in the uplink signal is located or a CDM configuration type of the DMRS, the time-frequency resource in which the zero power reference signal is located;
◦ the CDM configuration type of the DMRS, wherein the CDM configuration type of the DMRS comprises a first CDM type, a second CDM type, and a third CDM type, the time-frequency resource of the DMRS is determined from a group resource set based on a CDM group ID corresponding to the DMRS, the group resource set comprises a plurality of group resources, different CDM group IDs correspond to different group resources in the group resource set, and at least two of the plurality of group resources are located in different time domain symbols;
◦ a configuration mode of the zero power reference signal supporting the CDM group, wherein the configuration mode comprises a first configuration mode and a second configuration mode, an RE occupied by the zero power reference signal in the first configuration mode and an RE occupied by the DMRS are located in a same subcarrier, a subcarrier in which the zero power reference signal in the second configuration mode is located is a set of all subcarriers in which DMRSs of all CDM groups corresponding to a CDM configuration type are located, and the subcarriers in which the DMRSs of all the CDM groups are located are a part of subcarriers in the time-frequency resource unit for sending the uplink signal;
◦ a start time domain symbol occupied by a zero power reference signal of each CDM group;
◦ a quantity of time domain symbols occupied by the zero power reference signal of each CDM group; and
◦ a quantity of group resource units in each group resource.

6. The method according to claim 5, wherein the configuration mode of the zero power reference signal supporting the CDM group is the second configuration mode;

the CDM configuration type of the DMRS is the third CDM type; and
the time-frequency resource in which the zero power reference signal is located comprises the set of the time-frequency resources in which the DMRSs of all the CDM groups corresponding to the CDM configuration type are located except the time-frequency resource in which the DMRS of the uplink signal is located, the time-frequency resource of the DMRS is determined from the group resource set based on the CDM group ID corresponding to the DMRS, the group resource set comprises the plurality of group resources, different CDM group IDs correspond to different group resources in the group resource set, at least two of the plurality of group resources are located in different time domain symbols, and all subcarriers in which the DMRSs of all the CDM groups are located are a part of subcarriers in the time-frequency resource unit for sending the uplink signal.

7. The method according to claim 6, wherein each group resource comprises at least two group resource units;

the at least two group resource units occupy a same time domain symbol, and occupy different subcarriers; and
each group resource unit occupies at least one time domain symbol and at least one subcarrier.

8. The method according to claim 7, wherein the time-frequency resource unit for sending the uplink signal that comprises the DMRS is a resource block, RB, and any RB comprises two, three, or four group resource units;

each group resource unit occupies two consecutive time domain symbols;
each group resource unit occupies two consecutive subcarriers;
a quantity of time domain symbols occupied by group resource units of all CDM group IDs is 6; and
a quantity of subcarriers occupied by the group resource units of all the CDM group IDs is 4.

9. The method according to any one of claims 1 to 8, wherein in the time-frequency resource unit for sending the uplink signal, a difference between transmit power of different time domain symbols is less than a preset power difference threshold.

10. A terminal device configured to perform the method of any of claims 1 to 9.

**Patentansprüche**

1. Uplink-Übertragungsverfahren, das durch eine Endgeräteeinrichtung durchgeführt wird, wobei das Verfahren die folgenden Schritte umfasst:

• Senden (S 101) eines Uplink-Signals, das ein Nullleistungsreferenzsignal und ein Demodulationsreferenzsignal, DMRS, umfasst, an eine Netzwerkeinrichtung,

◦ wobei in einer Zeit-Frequenz-Ressource zum Senden des Uplink-Signals eine Übertragungsleistung des Uplink-Signals innerhalb eines Bereichs einer Zeit-Frequenz-Ressource des Nullleistungsreferenzsignals Null ist,
◦ wobei das Nullleistungsreferenzsignal zwei Ressourcenelemente, RE, belegt und die zwei RE sich in mindestens einem Zeitbereichssymbol unter zwei Zeitbereichssymbolen befinden, das mindestens eine Zeitbereichssymbol von einem Startzeitbereichssymbol startet, wobei das Startzeitbereichssymbol eines der Folgenden ist:

• das erste Zeitbereichssymbol nach einem Zeitbereichssymbol, in dem sich eine Zeit-Frequenz-Ressource des DMRS befindet;
• ein mittleres Zeitbereichssymbol in einer Zeit-Frequenz-Ressourceneinheit, wobei sich das mittlere Zeitbereichssymbol von dem Zeitbereichssymbol unterscheidet, in dem sich die Zeit-Frequenz-Ressource des DMRS befindet; oder
• das zweite Zeitbereichssymbol nach dem ersten Zeitbereichssymbol, in dem sich die Zeit-Frequenz-Ressource des DMRS befindet,
• **dadurch gekennzeichnet, dass** das Verfahren vor dem Senden des Uplink-Signals an die Netzwerkeinrichtung den Schritt eines Bestimmens des mindestens einen Zeitbereichssymbols umfasst, in dem sich die zwei RE befinden, basierend auf einer Zellidentität der bedienenden Zelle der Endgeräteeinrichtung, wobei:

• wenn $CID \times 2T$ < SumCR, ein Zeitbereichssymbol, in dem sich die zwei RE befinden, das Startzeitbereichssymbol ist;
• wenn $SumCR \leq CID \times 2T < 2 \times SumCR$, ein Zeitbereichssymbol, in dem sich die zwei RE befinden, das erste Zeitbereichssymbol nach dem Startzeitbereichssymbol ist, wobei CID die Zellidentität ist, SumCR eine Gesamtmenge an Zwischenträgern in einer Zeit-Frequenz-Ressourceneinheit ist, T eine Menge an Zwischenträgern im Abstand zwischen den zwei RE ist und T eine Ganzzahl größer oder gleich 1 oder kleiner oder gleich 6 ist, und
• wenn $CID \times 2T \geq 2 \times SumCR$, das mindestens eine Zeitbereichssymbol, in dem sich die zwei RE befinden, zwei Zeitbereichssymbole sind, und die zwei Zeitbereichssymbole zwei aufeinanderfolgende Zeitbereichssymbole in der Zeit-Frequenz-Ressourceneinheit sind.

2. Verfahren nach Anspruch 1, wobei Konfigurationsinformationen des Nullleistungsreferenzsignals mindestens eine der folgenden Informationen umfassen:

◦ eine Menge an Nullleistungsreferenzsignalen in einer beliebigen Zeit-Frequenz-Ressourceneinheit zum Senden des Uplink-Signals;
◦ eine Menge an Ressourcenelementen, RE, die durch jedes Nullleistungsreferenzsignal belegt sind;
◦ das Startzeitbereichssymbol;

◦ eine Verteilungsweise der zwei RE in dem Zeitbereichssymbol;
◦ mindestens einen Zwischenträger, in dem sich jedes Nullleistungsreferenzsignal befindet;
◦ einen Zwischenträgerversatz zwischen einem ersten Zwischenträger und einem zweiten Zwischenträger, in dem sich die zwei RE befinden; und
◦ wenn die Menge an Nullleistungsreferenzsignalen zwei ist, eine Angabe darüber, ob Zwischenträger, in denen sich die zwei Nullleistungsreferenzsignale befinden, gleich sind, und wenn die Zwischenträger, in denen sich die zwei Nullleistungsreferenzsignale befinden, unterschiedlich sind, einen Zwischenträgerversatz zwischen den Zwischenträgern, in denen sich die zwei Nullleistungsreferenzsignale befinden.

3. Verfahren nach Anspruch 1 oder 2, wobei ein Nullleistungsreferenzsignal, das einer Zielzelle entspricht, zwei RE belegt und die Zielzelle entweder die bedienende Zelle der Endgeräteeinrichtung oder eine Nachbarzelle der bedienenden Zelle ist;

ein erster Zwischenträger und ein zweiter Zwischenträger, die der Zielzelle entsprechen, nicht benachbart sind, und der erste Zwischenträger und der zweite Zwischenträger Zwischenträger sind, in denen sich die zwei RE befinden, die der Zielzelle entsprechen; und
RE, die durch Nullleistungsreferenzsignale belegt sind und verschiedenen Zielzellen entsprechen, sich aber in einem gleichen Zeitbereichssymbol befinden, sich in unterschiedlichen Zwischenträgern befinden.

4. Verfahren nach einem der vorhergehenden Ansprüche, wobei die Zeit-Frequenz-Ressourceneinheit zum Senden des Uplink-Signals 12 Zwischenträger umfasst und ein Frequenzbereichsversatz, FreqOffset, des ersten Zwischenträgers, der entweder der bedienenden Zelle oder der Nachbarzelle der bedienenden Zelle als Zielzelle entspricht, basierend auf einer Zellidentität, CID, der Zielzelle bestimmt wird, wobei

wenn $mod(CID, Q) < 6$, $FreqOffset = mod(CID, Q) \times 2$; oder
wenn $mod(CID, Q) = 6$, $FreqOffset = 11$,
wobei mod eine Modulo-Operation darstellt, Q eine Gesamtmenge an Zellen der bedienenden Zelle und der Nachbarzelle der bedienenden Zelle ist, Q eine Ganzzahl größer oder gleich 2 und kleiner als 7 ist und CID eine Ganzzahl größer oder gleich 0 ist.

5. Verfahren nach einem der vorhergehenden Ansprüche, wobei Konfigurationsinformationen des Nullleistungsreferenzsignals mindestens eine der folgenden Informationen umfassen:

o in einer beliebigen Zeit-Frequenz-Ressourceneinheit zum Senden des Uplink-Signals, eine Konfigurationsangabe darüber, ob das Nullleistungsreferenzsignal eine Code-Division-Multiplexing-Gruppe, CDM-Gruppe, unterstützt, wobei die Konfigurationsangabe darüber, ob das Nullleistungsreferenzsignal die CDM-Gruppe unterstützt, verwendet wird, um anzugeben, ob die Zeit-Frequenz-Ressource, in der sich das Nullleistungsreferenzsignal befindet, basierend auf einer Zeit-Frequenz-Ressource, in der sich das DMRS in dem Uplink-Signal befindet, oder einem CDM-Konfigurationstyp des DMRS zu konfigurieren ist;
o den CDM-Konfigurationstyp des DMRS, wobei der CDM-Konfigurationstyp des DMRS einen ersten CDM-Typ, einen zweiten CDM-Typ und einen dritten CDM-Typ umfasst, die Zeit-Frequenz-Ressource des DMRS aus einem Gruppenressourcensatz basierend auf einer dem DMRS entsprechenden CDM-Gruppen-ID bestimmt wird, der Gruppenressourcensatz eine Vielzahl von Gruppenressourcen umfasst, unterschiedliche CDM-Gruppen-ID unterschiedlichen Gruppenressourcen in dem Gruppenressourcensatz entsprechen und sich mindestens zwei der Vielzahl von Gruppenressourcen in unterschiedlichen Zeitbereichssymbolen befinden;
o einen Konfigurationsmodus des Nullleistungsreferenzsignals, das die CDM-Gruppe unterstützt, wobei der Konfigurationsmodus einen ersten Konfigurationsmodus und einen zweiten Konfigurationsmodus umfasst, eine durch das Nullleistungsreferenzsignal in dem ersten Konfigurationsmodus belegte RE und eine durch das DMRS belegte RE sich in einem gleichen Zwischenträger befinden, ein Zwischenträger, in dem sich das Nullleistungsreferenzsignal in dem zweiten Konfigurationsmodus befindet, ein Satz aller Zwischenträger ist, in denen sich DMRS aller CDM-Gruppen befinden, die einem CDM-Konfigurationstyp entsprechen, und die Zwischenträger, in denen sich die DMRS aller CDM-Gruppen befinden, ein Teil von Zwischenträgern in der Zeit-Frequenz-Ressourceneinheit zum Senden des Uplink-Signals sind;
o ein Startzeitbereichssymbol, das durch ein Nullleistungsreferenzsignal jeder CDM-Gruppe belegt ist;
o eine Menge an Zeitbereichssymbolen, die durch das Nullleistungsreferenzsignal jeder CDM-Gruppe belegt sind; und
o eine Menge an Gruppenressourceneinheiten in jeder Gruppenressource.

**6.** Verfahren nach Anspruch 5, wobei der Konfigurationsmodus des Nullleistungsreferenzsignals, das die CDM-Gruppe unterstützt, der zweite Konfigurationsmodus ist;
der CDM-Konfigurationstyp des DMRS der dritte CDM-Typ ist; und die Zeit-Frequenz-Ressource, in der sich das Nullleistungsreferenzsignal befindet, den Satz der Zeit-Frequenz-Ressourcen umfasst, in dem sich die DMRS aller CDM-Gruppen befinden, die dem CDM-Konfigurationstyp entsprechen, mit Ausnahme der Zeit-Frequenz-Ressource, in der sich das DMRS des Uplink-Signals befindet, die Zeit-Frequenz-Ressource des DMRS aus dem Gruppenressourcensatz basierend auf der CDM-Gruppen-ID bestimmt wird, die dem DMRS entspricht, der Gruppenressourcensatz die Vielzahl von Gruppenressourcen umfasst, unterschiedliche CDM-Gruppen-ID unterschiedlichen Gruppenressourcen in dem Gruppenressourcensatz entsprechen, mindestens zwei der Vielzahl von Gruppenressourcen sich in unterschiedlichen Zeitbereichssymbolen befinden und alle Zwischenträger, in denen sich die DMRS aller CDM-Gruppen befinden, ein Teil von Zwischenträgern in der Zeit-Frequenz-Ressourceneinheit zum Senden des Uplink-Signals sind.

**7.** Verfahren nach Anspruch 6, wobei jede Gruppenressource mindestens zwei Gruppenressourceneinheiten umfasst;

die mindestens zwei Gruppenressourceneinheiten ein gleiches Zeitbereichssymbol belegen und unterschiedliche Zwischenträger belegen; und
jede Gruppenressourceneinheit mindestens ein Zeitbereichssymbol und mindestens einen Zwischenträger belegt.

**8.** Verfahren nach Anspruch 7, wobei die Zeit-Frequenz-Ressourceneinheit zum Senden des Uplink-Signals, die das DMRS umfasst, ein Ressourcenblock, RB, ist und jeder RB zwei, drei oder vier Gruppenressourceneinheiten umfasst;

jede Gruppenressourceneinheit zwei aufeinanderfolgende Zeitbereichssymbole belegt;
jede Gruppenressourceneinheit zwei aufeinanderfolgende Zwischenträger belegt;
eine Menge an Zeitbereichssymbolen, die durch Gruppenressourceneinheiten aller CDM-Gruppen-ID belegt sind, 6 beträgt; und
eine Menge an Zwischenträgern, die durch die Gruppenressourceneinheiten aller CDM-Gruppen-ID belegt sind, 4 beträgt.

**9.** Verfahren nach einem der Ansprüche 1 bis 8, wobei in der Zeit-Frequenz-Ressourceneinheit zum Senden des Uplink-Signals eine Differenz zwischen einer Übertragungsleistung verschiedener Zeitbereichssymbole kleiner als ein voreingestellter Leistungsdifferenzschwellenwert ist.

**10.** Endgeräteeinrichtung, die dazu konfiguriert ist, das Verfahren nach einem der Ansprüche 1 bis 9 durchzuführen.

**Revendications**

**1.** Procédé de transmission de liaison montante réalisé par un dispositif terminal, le procédé comprenant les étapes :

• d'envoi (S 101), à un dispositif réseau, d'un signal de liaison montante qui comprend un signal de référence de puissance nulle et un signal de référence de démodulation, DMRS,

◦ dans lequel dans une ressource temps-fréquence pour envoyer le signal de liaison montante, la puissance de transmission du signal de liaison montante dans une plage d'une ressource temps-fréquence du signal de référence de puissance nulle est nulle,
◦ dans lequel le signal de référence de puissance nulle occupe deux éléments de ressources, RE, et les deux RE sont situés dans au moins un symbole de domaine temporel parmi deux symboles de domaine temporel, l'au moins un symbole de domaine temporel commençant à partir d'un symbole de domaine temporel de départ, dans lequel le symbole de domaine temporel de départ est l'un quelconque :

▪ du premier symbole de domaine temporel après un symbole de domaine temporel dans lequel une ressource temps-fréquence du DMRS est située ;
▪ d'un symbole de domaine temporel intermédiaire dans une unité de ressource temps-fréquence, dans lequel le symbole de domaine temporel intermédiaire est différent du symbole de domaine temporel dans lequel la ressource temps-fréquence du DMRS est située ; ou

▪ du second symbole de domaine temporel après le premier symbole de domaine temporel dans lequel la ressource temps-fréquence du DMRS est située ,

- **caractérisé en ce que**, avant l'envoi du signal de liaison montante au dispositif réseau, le procédé comprend l'étape de détermination de l'au moins un symbole de domaine temporel dans lequel les deux RE sont situés sur la base d'une identité de cellule de la cellule de desserte du dispositif terminal, dans lequel :

▪ lorsque $CID \times 2T <$ SumCR, un symbole de domaine temporel dans lequel les deux RE sont situés est le symbole de domaine temporel de départ ;

▪ lorsque SumCR $\leq CID \times 2T < 2\times$ SumCR, un symbole de domaine temporel dans lequel les deux RE sont situés, est le premier symbole de domaine temporel après le symbole de domaine temporel de départ, dans lequel la CID est l'identité de cellule, SumCR est une quantité totale de sous-porteuses dans une unité de ressource temps-fréquence, T est une quantité de sous-porteuses séparées entre les deux RE, et T est un entier supérieur ou égal à 1 ou inférieur ou égal à 6, et

▪ lorsque $CID \times 2T \geq 2 \times$ SumCR, l'au moins un symbole de domaine temporel dans lequel les deux RE sont situés, est deux symboles de domaine temporel, et les deux symboles de domaine temporel sont deux symboles de domaine temporel consécutifs dans l'unité de ressource temps-fréquence.

2. Procédé selon la revendication 1, dans lequel les informations de configuration du signal de référence de puissance nulle comprennent au moins l'une des informations suivantes :

○ une quantité de signaux de référence de puissance nulle dans une quelconque unité de ressource temps-fréquence pour envoyer le signal de liaison montante ;
○ une quantité d'éléments de ressources, RE, occupés par chaque signal de référence de puissance nulle ;
○ le symbole de domaine temporel de départ ;
○ un mode de distribution des deux RE dans le symbole de domaine temporel ;
○ au moins une sous-porteuse dans laquelle chaque signal de référence de puissance nulle est situé ;
○ un décalage de sous-porteuse entre une première sous-porteuse et une seconde sous-porteuse dans laquelle les deux RE sont situés ; et
○ lorsque la quantité de signaux de référence de puissance nulle est de deux, une indication indiquant si des sous-porteuses dans lesquelles les deux signaux de référence de puissance nulle sont situés sont les mêmes, et lorsque les sous-porteuses dans lesquelles les deux signaux de référence de puissance nulle sont situés, sont différentes, un décalage de sous-porteuse entre les sous-porteuses dans lesquelles les deux signaux de référence de puissance nulle sont situés.

3. Procédé selon la revendication 1 ou 2, dans lequel un signal de référence de puissance nulle correspondant à une cellule cible occupe deux RE, et la cellule cible est soit la cellule de desserte du dispositif terminal, soit une cellule voisine de la cellule de desserte ;

une première sous-porteuse et une seconde sous-porteuse correspondant à la cellule cible ne sont pas adjacentes l'une à l'autre, et la première sous-porteuse et la seconde sous-porteuse sont des sous-porteuses dans lesquelles les deux RE correspondant à la cellule cible sont situés ; et
des RE occupés par des signaux de référence de puissance nulle correspondant à des cellules cibles différentes mais situées dans un même symbole de domaine temporel sont situés dans des sous-porteuses différentes.

4. Procédé selon l'une quelconque des revendications précédentes, dans lequel l'unité de ressource temps-fréquence pour envoyer le signal de liaison montante comprend 12 sous-porteuses, et un décalage de domaine de fréquence, FreqOffset, de la première sous-porteuse correspondant à l'une ou l'autre de la cellule de desserte et de la cellule voisine de la cellule de desserte en tant que cellule cible est déterminé sur la base d'une identité de cellule CID de la cellule cible, dans lequel

lorsque $mod(CID, Q) < 6$, $FreqOffset = mod(CID, Q)\times 2$ ; ou lorsque $mod(CID, Q)=6$, $FreqOffset = 11$, dans lequel mod représente une opération modulo, Q est une quantité totale de cellules de la cellule de desserte et de la cellule voisine de la cellule de desserte, Q est un entier supérieur ou égal à 2 et inférieur à 7, et CID est un entier supérieur ou égal à 0.

5. Procédé selon l'une quelconque des revendications précédentes, dans lequel les informations de configuration du signal de référence de puissance nulle comprennent au moins l'une des informations suivantes :

◦ dans une quelconque unité de ressource temps-fréquence pour envoyer le signal de liaison montante, une indication de configuration indiquant si le signal de référence de puissance nulle prend en charge un groupe de multiplexage par répartition en code, groupe CDM, dans lequel l'indication de configuration indiquant si le signal de référence de puissance nulle prend en charge le groupe CDM est utilisée pour indiquer s'il faut configurer, sur la base d'une ressource temps-fréquence dans laquelle le DMRS dans le signal de liaison montante est situé ou un type de configuration CDM du DMRS, la ressource temps-fréquence dans laquelle le signal de référence de puissance nulle est situé ;

◦ le type de configuration CDM du DMRS, dans lequel le type de configuration CDM du DMRS comprend un premier type CDM, un deuxième type CDM et un troisième type CDM, la ressource temps-fréquence du DMRS est déterminée à partir d'un ensemble de ressources de groupe sur la base d'un ID de groupe CDM correspondant au DMRS, l'ensemble de ressources de groupe comprend une pluralité de ressources de groupe, différents ID de groupe CDM correspondent à différentes ressources de groupe dans l'ensemble de ressources de groupe, et au moins deux de la pluralité de ressources de groupe sont situées dans différents symboles de domaine temporel ;

◦ un mode de configuration du signal de référence de puissance nulle prenant en charge le groupe CDM, dans lequel le mode de configuration comprend un premier mode de configuration et un second mode de configuration, un RE occupé par le signal de référence de puissance nulle dans le premier mode de configuration et un RE occupé par le DMRS sont situés dans une même sous-porteuse, une sous-porteuse dans laquelle le signal de référence de puissance nulle dans le second mode de configuration est situé est un ensemble de toutes les sous-porteuses dans lesquelles des DMRS de tous les groupes CDM correspondant à un type de configuration CDM sont situés, et les sous-porteuses dans lesquelles les DMRS de tous les groupes CDM sont situés font partie des sous-porteuses dans l'unité de ressource temps-fréquence pour envoyer le signal de liaison montante ;

◦ un symbole de domaine temporel de départ occupé par un signal de référence de puissance nulle de chaque groupe CDM ;

◦ une quantité de symboles de domaine temporel occupés par le signal de référence de puissance nulle de chaque groupe CDM ; et

o une quantité d'unités de ressources de groupe dans chaque ressource de groupe.

6. Procédé selon la revendication 5, dans lequel le mode de configuration du signal de référence de puissance nulle prenant en charge le groupe CDM est le second mode de configuration ;

le type de configuration CDM du DMRS est le troisième type CDM ; et

la ressource temps-fréquence dans laquelle le signal de référence de puissance nulle est situé comprend l'ensemble de ressources temps-fréquence dans lesquelles les DMRS de tous les groupes CDM correspondant au type de configuration CDM sont situés, à l'exception de la ressource temps-fréquence dans laquelle le DMRS du signal de liaison montante est situé, la ressource temps-fréquence du DMRS est déterminée à partir de l'ensemble de ressources de groupe sur la base de l'ID de groupe CDM correspondant au DMRS, l'ensemble de ressources de groupe comprend la pluralité de ressources de groupe, différents ID de groupe CDM correspondent à différentes ressources de groupe dans l'ensemble de ressources de groupe, au moins deux de la pluralité de ressources de groupe sont situées dans différents symboles de domaine temporel, et toutes les sous-porteuses dans lesquelles les DMRS de tous les groupes CDM sont situés font partie de sous-porteuses dans l'unité de ressource temps-fréquence pour envoyer le signal de liaison montante.

7. Procédé selon la revendication 6, dans lequel chaque ressource de groupe comprend au moins deux unités de ressources de groupe ;

les au moins deux unités de ressources de groupe occupent un même symbole de domaine temporel et occupent des sous-porteuses différentes ; et

chaque unité de ressource de groupe occupe au moins un symbole de domaine temporel et au moins une sous-porteuse.

8. Procédé selon la revendication 7, dans lequel l'unité de ressource temps-fréquence pour envoyer le signal de liaison montante qui comprend le DMRS est un bloc de ressources, RB, et un quelconque RB comprend deux, trois ou quatre unités de ressources de groupe ;

chaque unité de ressource de groupe occupe deux symboles de domaine temporel consécutifs ;
chaque unité de ressource de groupe occupe deux sous-porteuses consécutives ;
une quantité de symboles de domaine temporel occupés par des unités de ressources de groupe de tous les ID de groupe CDM est de 6 ; et
la quantité de sous-porteuses occupées par les unités de ressources de groupe de tous les ID de groupe CDM est
de 4.

9. Procédé selon l'une quelconque des revendications 1 à 8, dans lequel dans l'unité de ressource temps-fréquence
pour envoyer le signal de liaison montante, une différence entre la puissance de transmission de différents symboles
de domaine temporel est inférieure à un seuil de différence de puissance prédéfini.

10. Dispositif terminal configuré pour réaliser le procédé de l'une quelconque des revendications 1 à 9.

Neighboring cell interference (uplink)

FIG. 1

| Base station | | Terminal device |
|---|---|---|

S201. Send configuration information of a zero power reference signal

S202. Generate an uplink signal based on the configuration information

S101. Send the uplink signal that includes the zero power reference signal

S102. Perform interference estimation based on the uplink signal received in a time-frequency resource of the zero power reference signal

S103. Demodulate the received uplink signal based on a result of the interference estimation

FIG. 2

FIG. 3A

FIG. 3B

FIG. 3C

FIG. 3D

Data channel

Interference
measurement

DMRS

**FIG. 3E**

Data channel

Interference
measurement

DMRS

**FIG. 3F**

FIG. 3G

FIG. 4

FIG. 5A

FIG. 5B

FIG. 6A

FIG. 6B

FIG. 7A

FIG. 7B

Subcarrier

FIG. 8A

Subcarrier

FIG. 8B

FIG. 9A

FIG. 9B

FIG. 9C

FIG. 9D

FIG. 10

First CDM type: A
DMRS of each group
occupies one time
domain symbol
(1)

First CDM type: A
DMRS of each group
occupies two time
domain symbols
(2)

Second CDM type: A
DMRS of each group
occupies one time
domain symbol
(3)

Second CDM type: A
DMRS of each group
occupies two time
domain symbols
(4)

FIG. 11

A first CDM type supports two groups, and a DMRS
of each group occupies one time domain symbol

Frequency domain subcarrier

Time domain OFDM symbol

☐ Data channel

▨ Interference
measurement

▦ DMRS

▨ Idle or data

Two UEs (for example, UE 0 and UE 1)
can multiplex and send the DMRS

(1)

Frequency domain subcarrier

Time domain OFDM symbol

☐ Data channel

▨ Interference
measurement

▥ DMRS

▨ Idle or data

Two UEs (for example, UE 2 and UE 3)
can multiplex and send the DMRS

(2)

FIG. 12

EP 4 184 816 B1

54

A first CDM type supports two groups, and a DMRS of
each group occupies two time domain symbols

Frequency domain subcarrier — Time domain OFDM symbol

- ☐ Data channel
- ▨ Interference measurement
- ▦ DMRS
- ▧ Idle or data

Support four UEs
(for example, UE 0, 1, 4, and 5)

(1)

Support four UEs
(for example, UE 2, 3, 6, and 7)

(2)

FIG. 13

EP 4 184 816 B1

A second CDM type supports three groups, and a DMRS of each
group occupies one time domain symbol

Support two UEs
(for example, UE 0 and 1)

FIG. 14(1)

Support two UEs
(for example, UE 2 and 3)

FIG. 14(2)

EP 4 184 816 B1

Support two UEs
(for example, UE 4 and 5)

FIG. 14(3)

A second CDM type supports three groups, and a DMRS
of each group occupies two time domain symbols

Data channel

Interference
measurement

DMRS

Idle or data

Support four UEs
(for example, UE 0, 1, 6, and 7)

FIG. 15(1)

Data channel

Interference
measurement

DMRS

Idle or data

Support four UEs
(for example, UE 2, 3, 8, and 9)

FIG. 15(2)

EP 4 184 816 B1

Support four UEs
(for example, UE 4, 5, 10, and 11)

FIG. 15 (3)

First CDM type:
One time domain symbol is occupied

**(1)**
Support two UEs
(for example, UE 0 and 1)

**(2)**
Support two UEs
(for example, UE 2 and 3)

FIG. 16

First CDM type:
Two time domain symbols are occupied

Support four UEs
(for example, UE 0, 1, 4, and 5)

(1)

Support four UEs
(for example, UE 2, 3, 6, and 7)

(2)

FIG. 17

First CDM type: One time domain symbol is occupied

Data channel
Interference measurement
DMRS
Idle or data

Frequency domain subcarrier

Time domain OFDM symbol

Support four UEs
(for example, UE 2 and 3)

(2)

Data channel
Interference measurement
DMRS
Idle or data

Frequency domain subcarrier

Time domain OFDM symbol

Support four UEs
(for example, UE 0 and 1)

(1)

FIG. 18

First CDM type: Two time domain symbols are occupied

Support four UEs
(for example, UE 0, 1, 4, and 5)

(1)

Support four UEs
(for example, UE 2, 3, 6, and 7)

(2)

FIG. 19

EP 4 184 816 B1

Third CDM type: A DMRS of each CDM group occupies one time domain symbol

☐ Data channel

▨ Interference measurement

▬ DMRS

▨ Idle or data

Support two UEs
(for example, UE 0 and 1)

FIG. 20(1)

☐ Data channel

▨ Interference measurement

▥ DMRS

▨ Idle or data

Support two UEs
(for example, UE 2 and 3)

FIG. 20(2)

EP 4 184 816 B1

Fr

Data channel

Interference measurement

DMRS

Idle or data

0          Time domain OFDM symbol

Support two UEs
(for example, UE 4 and 5)

FIG. 20(3)

Frequency domain subcarrier

Data channel

Interference measurement

DMRS

Idle or data

0          Time domain OFDM symbol

Support two UEs
(for example, UE 6 and 7)

FIG. 20(4)

EP 4 184 816 B1

65

Third CDM type: A DMRS of each CDM group occupies two time domain symbols

Frequency domain subcarrier

Data channel

Interference measurement

DMRS

Idle or data

0

Time domain OFDM symbol

Support four UEs
(for example, UE 0, 1, 8, and 9)

FIG. 21(1)

Frequency domain subcarrier

Data channel

Interference measurement

DMRS

Idle or data

0

Time domain OFDM symbol

Support four UEs
(for example, UE 2, 3, 10, and 11)

FIG. 21(2)

EP 4 184 816 B1

66

Data channel

Interference measurement

DMRS

Idle or data

Frequency domain subcarrier

0

Time domain OFDM symbol

Support four UEs
(for example, UE 4, 5, 12, and 13)

FIG. 21(3)

Data channel

Interference measurement

DMRS

Idle or data

Frequency domain subcarrier

0

Time domain OFDM symbol

Support four UEs
(for example, UE 6, 7, 14, and 15)

FIG. 21(4)

EP 4 184 816 B1

Third CDM type: A DMRS of each CDM group occupies two time domain symbols

Support four UEs
(for example, UE 0, 1, 8, and 9)

FIG. 22(1)

Support four UEs
(for example, UE 2, 3, 10, and 11)

FIG. 22(2)

EP 4 184 816 B1

Support four UEs
(for example, UE 4, 5, 12, and 13)

FIG. 22(3)

Support four UEs
(for example, UE 6, 7, 14, and 15)

FIG. 22(4)

Frequency domain subcarrier

Data channel

Interference measurement

DMRS

Idle or data

0

Time domain OFDM symbol

Support four UEs
(for example, UE 0, 1, 8, and 9)

FIG. 22(5)

Frequency domain subcarrier

Data channel

Interference measurement

DMRS

Idle or data

0

Time domain OFDM symbol

Support four UEs
(for example, UE 2, 3, 10, and 11)

FIG. 22(6)

1100

Sending module
1102

Receiving module
1103

Processing module
1101

Storage module
1104

FIG. 23

1200

Sending module
1202

Receiving module
1203

Processing module
1201

Storage module
1204

FIG. 24

1300

| Processor 1310 | Radio frequency circuit 1340 | Antenna 1350 |

Bus 1360

| Memory 1320 | Baseband circuit 1330 |

FIG. 25

1400

| Processor 1410 | Radio frequency circuit 1440 | Antenna 1450 |

Bus 1460

| Memory 1420 | Baseband circuit 1430 |

FIG. 26

**EP 4 184 816 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018044715 A1
- US 2020068549 A1
- EP 3624477 A1